# FASCICULE DE BREVET EUROPEEN

(11) **EP 1 603 977 B1**
(45) Date de publication et mention de la délivrance du brevet: **11.12.2019**
(21) Numéro de dépôt: 04721248.5
(22) Date de dépôt: 17.03.2004
(51) Int. Cl.: C09C 1/02, D21H 17/67

(54) **NOUVEAU PIGMENT MINERAL CONTENANT DU CARBONATE DE CALCIUM, SUSPENSION AQUEUSE LE CONTENANT ET SES USAGES**
NEUARTIGES MINERALPIGMENT ENTHALTEND CALCIUMCARBONAT, WÄSSRIGE SUSPENSION DIESES ENTHALTEND SOWIE SEINE VERWENDUNG
NOVEL INORGANIC PIGMENT CONTAINING CALCIUM CARBONATE, AQUEOUS SUSPENSION CONTAINING SAME, AND USES THEREOF

(30) Priorité: 18.03.2003 FR 0303281
(43) Date de publication de la demande: 14.12.2005
(73) Titulaire: Omya International AG, 4665 Oftringen (CH)
(72) Inventeur: GANE, Patrick, CH-4852 Rothrist (CH); BURI, Matthias, CH-4852 Rothrist (CH); BLUM, Rene, Vinzenz, CH-4915 St Urban (CH)
(74) Mandataire: Plougmann Vingtoft a/s
(86) Numéro de dépôt international: PCT/IB2004/000773
(87) Numéro de publication internationale: WO 2004/083316

(56) Documents cités:
- WO-A-01/40576
- FR-A- 2 787 802
- US-A- 2 263 656
- US-A- 5 164 006

## Description

La présente invention concerne le secteur technique des charges minérales et concerne notamment des pigments minéraux tels que définis dans la revendication 1 utilisées dans les applications papetières, telles que la charge de masse et/ou le couchage du papier, et plus particulièrement du papier support d'impression, notamment l'impression offset, et plus particulièrement l'impression digitale comme l'impression par jet d'encre et/ou laser et leurs améliorations par des traitements appropriés en couchage et/ou en masse afin notamment d'améliorer l'imprimabilité des papiers couchés et/ou non couchés, et/ou l'aptitude de l'encre à ne pas transpercer le papier couramment appelée dans le domaine papetier « ink stricke through » ainsi que l'aptitude de l'encre à ne pas être vue au recto du papier, aptitude également couramment dénommée dans le domaine papetier « ink show through » et/ou encore afin de diminuer les bavures d'encre lors d'impression par jet d'encre.

L'invention concerne également un procédé de fabrication d'un pigment minéral tel que défini dans la revendication 9.

Ce pigment minéral selon l'invention peut éventuellement être mis en suspension aqueuse au moyen d'un électrolyte anionique pour obtenir une suspension anionique aqueuse de charge contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium.

Cette suspension aqueuse anionique contient éventuellement un ou plusieurs électrolytes anioniques tels que par exemple un ou plusieurs dispersants.
Ce pigment minéral selon l'invention peut éventuellement être mis en suspension aqueuse au moyen d'un électrolyte cationique pour obtenir une suspension cationique aqueuse de charge contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium.

Ce pigment minéral selon l'invention peut éventuellement être mis en suspension aqueuse au moyen d'un électrolyte faiblement anionique pour obtenir une suspension aqueuse faiblement anionique de charge contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium.

L'invention concerne enfin l'utilisation dudit pigment minéral et/ou de ses suspensions aqueuses comme charge de masse dans la fabrication de la feuille de papier non couchée et/ou comme support de formulation de couchage dans les opérations de traitement de surface du papier et/ou de couchage du papier.

En dernier lieu, l'invention concerne le papier support, pour impression digitale comme l'impression par jet d'encre, contenant ladite suspension aqueuse de pigment minéral contenant un pigment formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium.

Il est bien connu de l'homme du métier d'incorporer des charges ou pigments tels que le carbonate de calcium dans les compositions de couchage du papier mises en œuvre dans les techniques d'enregistrement et d'impression par jet d'encre afin que le papier absorbe rapidement l'encre appliquée donnant ainsi de la netteté (sharpness) d'impression, des bavures moindres, et une aptitude à ne pas transpercer améliorées de l'impression, c'est-à-dire une densité d'impression améliorée tout en assurant une impression rapide.

Il est également bien connu de l'homme du métier de mettre en œuvre du silicate de sodium pour améliorer les propriétés du carbonate de calcium.

Ainsi l'homme du métier connaît la demande de brevet WO 98/20079 qui, au contraire de la présente invention propose un carbonate de calcium contenant au moins 0,1 % en poids, par rapport au poids sec de carbonate de calcium, de silicate de sodium et au moins 0,1 % en poids, par rapport au poids sec de carbonate de calcium d'un acide faible ou d'alun et n'enseigne que le traitement d'un carbonate de calcium avec du silicate de sodium et un acide dit faible pour rendre ledit carbonate de calcium résistant aux acides dans la fabrication des papiers neutre à faiblement acide. Ainsi ce document n'enseigne nullement la solution proposée par la présente invention en vue d'obtenir les performances requises par les nouvelles techniques d'impression du papier.

De même, la demande de brevet WO 95/03251, qui décrit une simple addition d'une solution aqueuse de silicate de soude dans un lait de chaux puis une réaction de ladite chaux avec du gaz carbonique à température élevée pour former un carbonate de calcium destiné à remplacer le dioxyde de titane comme charge de masse du papier, n'enseigne rien qui puisse résoudre le présent problème.

Une autre demande de brevet WO 00/26305 décrit l'ajout de silicate de soude dans une suspension de carbonate de calcium mais sans utilisation de donneur d'ions H₃O⁺ et ce procédé ne permet pas d'obtenir une densité d'impression suffisante pour satisfaire pleinement l'utilisateur final.

Un autre document de l'art antérieur WO 01/92422, qui décrit un procédé de fabrication d'un pigment composite de carbonate de calcium et de silicate par ajout de silicate de sodium à un carbonate de calcium précipité à la fin de la précipitation du carbonate de calcium par le gaz carbonique pour obtenir un pigment composite de surface spécifique BET comprise entre 5 et 25 m²/g, propose ainsi l'utilisation d'un silicate soluble sans mise en œuvre de donneurs d'ions H₃O⁺moyennement forts à forts en décrivant une technique différente qui aboutit à un taux élevé de baves présentes sur la lame lors du couchage.

L'enseignement de tout cet art antérieur relatif au traitement du carbonate de calcium par du silicate de soude ne permet pas à l'homme du métier d'obtenir les performances requises par les nouvelles techniques d'impression du papier.

Il existe donc un besoin important de l'utilisateur final visant à obtenir un papier à forte densité d'impression lors d'une impression par jet d'encre, c'est-à-dire à obtenir un papier présentant une diminution des bavures d'encre et une augmentation de l'aptitude de l'encre à ne pas transpercer le papier.

D'autre part, le WO 00/39222 décrit un procédé pour former un pigment permettant une réduction du poids du papier pour une épaisseur donnée mais n'enseigne aucune solution au problème que résout la présente invention à savoir l'amélioration des propriétés du papier consistant en une réduction des bavures de l'encre lors de l'impression de la feuille de papier contenant le même pigment dans sa masse et en couchage, ces impressions étant réalisées aux vitesses très élevées mises en œuvre dans les nouvelles techniques d'impression.

Un autre document « Nordic Pulp and Paper Research Journal », Vol 17 n° 2/2002, pp 119-129, qui décrit le contrôle de la dynamique d'absorption de l'encre aqueuse dans les structures de revêtement pigmenté poreux pour améliorer les performances d'impression, montre que le volume du pore du revêtement correspond au potentiel d'absorption de l'eau provenant des encres, telles que les encres d'impression digitale sur un support non absorbant en ne parlant nullement d'améliorer la densité d'impression.

US 5 164 006 A décrit un pigment minéral contenant des particules de carbonate de calcium naturel traitées d'une solution de silicate de sodium, le produit de cette réaction étant caractérisé en ce qu'il contient de 5 à 10 % en poids dudit silicate.

Poursuivant ses recherches pour réduire les bavures de l'encre des papiers ainsi qu'augmenter l'aptitude de l'encre à ne pas transpercer le papier couramment appelée dans le domaine papetier « ink stricke through » dans la masse de la feuille avec le même pigment, la Demanderesse a alors, de manière surprenante, trouvé qu'un pigment minéral contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium, et contenant moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium, permet d'obtenir un papier avec une aptitude réduite à former des bavures d'encre des papiers couchés ainsi qu'une meilleure aptitude de l'encre à ne pas transpercer le papier couramment appelée dans le domaine papetier « ink stricke through » dans la masse de la feuille lors d'une impression par jet d'encre.

D'autre part la Demanderesse a également trouvé que le pigment minéral précité selon l'invention permet d'améliorer sur la coucheuse le comportement de la formulation pour l'impression par jet d'encre.

De plus, la Demanderesse a également trouvé que le pigment minéral précité selon l'invention permet d'obtenir un pigment utilisable aussi bien en charge de masse qu'en couchage et que ce pigment est indépendant des systèmes de couchage utilisés, c'est-à-dire que ce pigment est utilisable aussi bien dans une application charge de masse que dans une application couchage mettant indifféremment en œuvre une presse encolleuse, ou un film presse, ou une coucheuse à jet ou encore une coucheuse à lame.

La Demanderesse a également mis au point un procédé d'obtention d'un pigment minéral contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium, permettant d'obtenir un papier à forte densité d'impression lors d'une impression par jet d'encre.

L'invention a donc pour objet un pigment minéral contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium, et contenant moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium, permettant d'obtenir un papier à forte densité d'impression lors d'une impression par jet d'encre.

Un autre objet de l'invention concerne la suspension aqueuse du pigment minéral selon l'invention précité.

Un autre objet de l'invention est également un procédé de fabrication d'un pigment minéral contenant un produit formé in situ par la double et/ou multi réaction entre un carbonate de calcium et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe, et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium et contenant moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium.

L'invention a également pour objet le pigment minéral obtenu par le procédé selon l'invention ainsi que sa mise en oeuvre comme charge de masse dans la fabrication de la feuille de papier et son utilisation dans les opérations de traitement de surface du papier et/ou de couchage du papier.

Enfin un autre objet de l'invention est le papier pour impression par jet d'encre contenant le pigment minéral selon l'invention.

Le pigment minéral selon l'invention se caractérise en ce qu'il contient un produit formé in situ par la double et/ou multi réaction entre un carbonate de calcium et le ou les produits de réaction dudit carbonate avec du CO₂ gazeux formé in situ et/ou provenant d'une alimentation externe, et le ou les produits de réaction dudit carbonate avec un ou plusieurs donneurs d'ions H₃O⁺ moyennement forts à forts et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium, et en ce qu'il contient moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium,
et se caractérise en ce qu'il a un pH supérieur à 7,5 mesuré à 20°C.

De manière particulière, le pigment minéral selon l'invention est caractérisé en ce que le carbonate de calcium est un carbonate de calcium naturel ou un mélange de carbonate de calcium naturel avec du talc, du kaolin, du dioxyde de titane, de l'oxyde de magnésium ou avec tout minéral inerte vis-à-vis des donneurs d'ions H₃O⁺ moyennement forts à forts.
De manière tout à fait préférée ce carbonate de calcium naturel est choisi parmi un marbre, une calcite, une craie, un dolomite ou leurs mélanges.

Il est également caractérisé de manière particulière en ce que le ou les donneurs d'ions H₃O⁺ forts sont choisis parmi les acides forts, ou leurs mélanges générant des ions H₃O⁺, et sont préférentiellement choisis parmi les acides ayant un pKₐ inférieur ou égal à zéro à 22°C et plus particulièrement choisis parmi l'acide sulfurique, l'acide chlorhydrique ou leurs mélanges et caractérisé en ce que le ou les donneurs d'ions H₃O⁺ moyennement forts sont choisis parmi les acides ayant un pKₐ compris entre 0 et 2,5 inclus à 22°C et plus particulièrement choisis parmi H₂SO₃, HSO₄⁻, H₃PO₄ , l'acide oxalique ou leurs mélanges, et encore plus préférentiellement parmi les acides formant des sels de cation bivalent, comme le calcium, presque insolubles dans l'eau, c'est-à-dire de solubilité inférieure à 0,01% en masse.

Le pigment minéral selon l'invention se caractérise en ce qu'il a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu'un diamètre médian, déterminé par une mesure au Sedigraph™5100, compris entre 0,1 et 50 micromètres, préférentiellement compris entre 0,5 et 40 micromètres et très préférentiellement entre 1 et 10 micromètres.

La suspension aqueuse selon l'invention se caractérise en ce qu'elle contient le pigment minéral selon l'invention.

Le procédé de fabrication, selon l'invention, d'un pigment minéral à l'état sec ou en suspension aqueuse contenant un produit formé in situ par la double et/ou multi réaction entre un carbonate de calcium et le ou les produits de réaction dudit carbonate avec du CO₂ gazeux formé in situ et/ou provenant d'une alimentation externe, et le ou les produits de réaction dudit carbonate avec un ou plusieurs donneurs d'ions H₃O⁺ moyennement forts à forts et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium et contenant moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium, se caractérise en ce qu'il comporte les étapes suivantes :
a) le traitement du carbonate de calcium en phase aqueuse avec le ou les donneurs d'ions H₃O⁺ moyennement forts à forts et le traitement avec le CO₂ gazeux formé in situ et/ou provenant d'une alimentation externe, traitement partie intégrante de l'étape a),
b) l'addition antérieure et/ou simultanée à l'étape a) d'au moins un silicate d'aluminium et/ou d'au moins une silice synthétique et/ou d'au moins un silicate de calcium et/ou d'au moins un silicate d'un sel monovalent tel que le silicate de sodium et/ou le silicate de potassium et/ou le silicate de lithium, de préférence tel que le silicate de sodium et éventuellement l'addition antérieure et/ou simultanée d'un aluminate de sodium et/ou potassium,
c) éventuellement l'ajout d'une base, préférentiellement d'une base à ion bivalent, très préférentiellement de la chaux et/ou du carbonate de calcium sous forme sèche ou en suspension aqueuse contenant éventuellement un ou plusieurs dispersants anioniques, cationiques et/ou faiblement anioniques,
d) éventuellement une mise en suspension aqueuse anionique du produit obtenu dans l'étape b) ou c) à une concentration en matière sèche comprise entre 1 % et 80 % à l'aide éventuellement d'au moins un électrolyte anionique,
e) éventuellement une mise en suspension aqueuse cationique du produit obtenu dans l'étape b) ou c) par l'ajout d'au moins un électrolyte cationique,
f) éventuellement une mise en suspension aqueuse faiblement anionique du produit obtenu dans l'étape b) ou c) par l'ajout d'au moins un électrolyte faiblement anionique.
g) éventuellement un séchage après l'une des étapes c) à f).

De manière particulière, le procédé selon l'invention se caractérise en ce que le carbonate de calcium est un carbonate de calcium naturel ou un mélange de carbonate de calcium naturel avec du talc, du kaolin, du dioxyde de titane, de l'oxyde de magnésium ou avec tout minéral inerte vis-à-vis des donneurs d'ions H₃O⁺ moyennement forts à forts et de manière tout à fait préférée ce carbonate de calcium naturel est choisi parmi un marbre, une calcite, une craie, une dolomite ou leurs mélanges.

De manière plus particulière, le procédé selon l'invention se caractérise en ce que le ou les donneurs d'ions H₃O⁺ moyennement forts à forts sont choisis parmi tout acide moyennement fort à fort, ou tout mélange de tels acides, générant des ions H₃O⁺ et notamment générant des ions H₃O⁺ dans les conditions du traitement.

Selon un mode de réalisation également préféré, l'acide fort sera choisi parmi les acides ayant un pKₐ inférieur ou égal à zéro à 22°C et plus particulièrement choisi parmi l'acide sulfurique, l'acide chlorhydrique ou leurs mélanges.

Selon un mode de réalisation également préféré, l'acide moyennement fort sera choisi parmi les acides ayant un pKₐ compris entre 0 et 2,5 inclus à 22°C et plus particulièrement choisi parmi H₂SO₃, HSO₄⁻, H₃PO₄, l'acide oxalique ou leurs mélanges et encore plus préférentiellement parmi les acides formant des sels de cation bivalent, comme le calcium, presque insolubles dans l'eau, c'est-à-dire de solubilité inférieure à 0,01 % en masse. On peut citer, notamment par exemple, le pKₐ₁ de H₃PO₄ égal à 2,161 (Römpp Chemie, Edition Thieme).

Selon un mode de réalisation également préféré, le ou les acides forts pourront être mélangés à l'acide ou aux acides moyennement forts.

Selon l'invention, la quantité en mole de donneurs d'ions H₃O⁺ moyennement forts à forts par rapport au nombre de moles de CaCO₃ est au total comprise entre 0,05 et 1, préférentiellement entre 0,1 et 0,5.

Selon un mode de réalisation préférée, l'étape a) et/ou l'étape b) peuvent être répétées plusieurs fois.

De même selon un mode de réalisation préféré, la température pendant l'étape a) du traitement est comprise entre 5°C et 100°C, et préférentiellement entre 65°C et 90°C.

De manière également préférée, la durée des étapes a) à c) du traitement dure de 0,01 heure à 24 heures et préférentiellement de 0,2 heure à 6 heures.

Selon encore un mode de réalisation préféré, entre une heure et vingt quatre heures et plus particulièrement entre une heure et cinq heures après la fin du traitement, le pH est supérieur à 7,5 et la teneur de silicate de sel monovalent tel que le silicate de sodium, de potassium, de lithium ou leurs mélanges est inférieure à 0,1 % en poids par rapport au poids sec de carbonate de calcium.

Le procédé de traitement, selon l'invention, est mis en œuvre en phase aqueuse à des concentrations en matière sèche faibles, moyennement fortes ou fortes, mais peut être aussi mis en oeuvre pour des mélanges de slurries constituées de ces différentes concentrations. De manière préférentielle, la teneur en matière sèche est comprise entre 0,3 % et 80 % en poids, très préférentiellement entre 15 % et 60 %.
De manière toute préférée, le procédé selon l'invention se caractérise en ce que l'étape b) est une addition de 0,1 % à 25 %, préférentiellement de 5 % à 10% en poids sec par rapport au poids sec de carbonate de calcium.

De manière particulière l'étape d) met en œuvre de 0,05 % à 5,0 % en poids sec d'un électrolyte anionique choisi parmi les homopolymères ou copolymères à l'état acide non neutralisé, partiellement neutralisé ou totalement neutralisé, des monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges, ou encore les polyphosphates.

De même l'étape e) met en œuvre, de manière particulière, de 0,05 % à 5,0 % en poids sec d'un électrolyte cationique choisi parmi les homopolymères ou copolymères des monomères cationiques ou ammonium quaternaire à insaturation éthylénique tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium.
De même l'étape f) met en œuvre, de manière particulière, de 0,05 % à 5,0 % en poids sec d'un électrolyte faiblement anionique choisi parmi les copolymères faiblement ioniques et hydrosolubles se composant :
a) d'au moins un monomère anionique et à fonction carboxylique ou dicarboxylique ou phosphorique ou phosphonique ou sulfonique ou leur mélange,
b) d'au moins un monomère non ionique, le monomère non ionique étant constitué 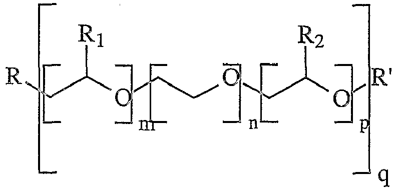 d'au moins un monomère de formule (I) :
   (I)
   dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤(m+n+p) q ≤150, et préférentiellement tel que 15 ≤(m+n+p)q ≤120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
d) éventuellement d'au moins un monomère possédant au moins deux insaturations éthyléniques appelé dans la suite de la demande monomère réticulant,

Le pigment minéral contenant un produit formé in situ selon l'invention se caractérise en ce qu'il est obtenu par le procédé selon l'invention.

Ce produit contient alors moins de 0,1 % en poids de silicate d'un sel monovalent tel que le silicate de sodium, de potassium ou de lithium ou leurs mélanges, de préférence tel que le silicate de sodium, par rapport au poids sec de carbonate de calcium.

Le pigment minéral obtenu par le procédé selon l'invention se caractérise en ce qu'il a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu'un diamètre médian, déterminé par une mesure au Sedigraph™5100, compris entre 0,1 et 50 micromètres, préférentiellement compris entre 0,5 et 40 micromètres et très préférentiellement entre 1 et 10 micromètres.

Dans une autre variante, la suspension aqueuse du pigment minéral obtenu selon l'étape d) se caractérise en ce que le pigment minéral a une surface spécifique comprise entre 25 m²/g et 200 m²/g mesurée selon la méthode BET, préférentiellement - entre 30 m²/g et 80 m²/g et très préférentiellement entre 35 m²/g et 60 m²/g ainsi qu'un diamètre médian, déterminé par une mesure au Sedigraph™5100, compris entre 0,1 et 50 micromètres préférentiellement compris entre 0,5 et 40 micromètres et très préférentiellement entre 1 et 10 micromètres, et en ce que la suspension a une teneur en matière sèche comprise entre 0,3 % et 80 %, préférentiellement comprise entre 15 % et 60 %, et en ce qu'elle contient de 0,05% à 5,0 % en poids sec, par rapport au poids sec de carbonate de calcium, d'au moins un électrolyte anionique.

Cet électrolyte anionique est choisi parmi les électrolytes anioniques précédemment cités.

La suspension aqueuse du pigment minéral obtenu selon l'étape e) se caractérise en ce que le pigment minéral a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu' un diamètre médian, déterminé par une mesure au Sedigraph™5100, compris entre 0,1 et 50 micromètres préférentiellement compris entre 0,5 et 40 micromètres et très préférentiellement entre 1 et 10 micromètres, et en ce que la suspension a une teneur en matière sèche comprise entre 0,3 % et 80 %, préférentiellement comprise entre 15 % et 60 %, et en ce qu'elle contient de 0,1 % à 5,0 % en poids sec, par rapport au poids sec de carbonate de calcium, d'au moins un électrolyte cationique.

Cet électrolyte cationique est choisi parmi les électrolytes cationiques précédemment cités.

La suspension aqueuse du pigment minéral obtenu selon l'étape f) se caractérise en ce que le pigment minéral a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu' un diamètre médian, déterminé par une mesure au Sedigraph™5100, compris entre 0,1 et 50 micromètres préférentiellement compris entre 0,5 et 40 micromètres et très préférentiellement entre 1 et 10 micromètres, et en ce que la suspension a une teneur en matière sèche comprise entre 0,3 % et 80 %, préférentiellement comprise entre 15 % et 60 %, et en ce qu'elle contient de 0,1 % à 5,0 % en poids sec, par rapport au poids sec de carbonate de calcium, d'au moins un électrolyte faiblement anionique.

Selon une variante, le pigment minéral contenant un produit formé in situ selon l'invention se caractérise en ce qu'il est sous forme sèche lorsque l'étape g) du procédé selon l'invention est mise en œuvre.

Le papier pour impression par jet d'encre selon l'invention se caractérise en ce qu'il contient la charge minérale selon l'invention dans la masse et/ou dans le couchage.

Il se caractérise également en ce qu'il contient la suspension aqueuse du nouveau pigment minéral dans la masse et/ou dans le couchage.

Les exemples suivants illustrent l'invention sans toutefois en limiter la portée.

### EXEMPLE 1

Cet exemple illustre l'invention et le pigment minéral selon l'invention. Il concerne le procédé de fabrication d'un pigment minéral contenant un produit formé in situ par la double et/ou multi réaction entre un carbonate de calcium naturel et le ou les produits de réaction dudit carbonate avec un ou plusieurs donneurs d'ions H₃O⁺ moyennement forts à forts et le ou les produits de réaction dudit carbonate avec du CO₂ gazeux formé in situ et/ou provenant d'une alimentation externe et au moins un silicate d'aluminium et/ou au moins une silice synthétique et/ou au moins un silicate de calcium et/ou au moins un silicate d'un sel monovalent tel que le silicate de sodium et/ou le silicate de potassium et/ou le silicate de lithium, de préférence tel que le silicate de sodium et/ou au moins un hydroxyde d'aluminium et/ou au moins un aluminate de sodium et/ou de potassium, ainsi que le pigment minéral obtenu par le procédé.

### Essai n° 1

Cet essai illustre l'art antérieur.

On dilue 0,5 kg, calculé en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension aqueuse de 75 % d'extrait sec, dispersée avec 0,6 % d'un polyacrylate de soude, jusqu'à l'obtention d'une suspension aqueuse d'une concentration en matière sèche de 15 % en poids, par de l'eau distillée, dans le conteneur de 10 litres. Puis on traite la suspension ainsi formée par 10 % d'acide phosphorique en solution à 10 % en poids, à 65°C sous agitation pendant 20 minutes à 500 tours par minute. Après 15 minutes, on fait barboter du CO₂ au travers de la suspension de carbonate de calcium durant 1 heures. Ensuite, le pH a été ajusté, entre 8 et 8,5 avec une suspension de chaux à une concentration égale à 10 % en poids sec.
Le pigment minéral obtenu a un extrait sec égal à 18,8%, une surface spécifique BET égale à 31,7 m²/g (mesurée selon la norme ISO 9277) ainsi qu'un pH égal à 8,4.

L'annexe 1 représente l'image du pigment obtenu par microscope électronique de type LEO 435VPi de la société LEO Elektronenmikroskopie GmbH.

### Essai n° 2

Cet essai illustre l'art antérieur.

On dilue 0,5 kg, calculé en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension aqueuse de 75 % d'extrait sec, dispersée avec 0,6% d'un polyacrylate de soude, jusqu'à l'obtention d'une suspension d'une concentration en matière sèche de 15 % en poids, par de l'eau distillée, dans le conteneur de 10 litres. Puis on traite la suspension ainsi formée par 25 % d'acide phosphorique en solution à 10 % en poids, à 65°C sous agitation pendant 20 minutes à 500 tours par minute. Après 15 minutes, on fait barboter du CO₂ au travers de la suspension de carbonate de calcium durant 1 heure. Ensuite, le pH a été ajusté, entre 8 et 8,5 avec une suspension de chaux à une concentration égale à 10 % en poids sec.

Le pigment minéral obtenu a un extrait sec égal à 18,8%, une surface spécifique BET égale à 31,7 m²/g (mesurée selon la norme ISO 9277) ainsi qu'un pH égal à 8,4.

L'annexe 2 représente l'image du pigment obtenu par microscope électronique de type LEO 435VPi de la société LEO Elektronenmikroskopie GmbH.

### Essai n° 3

Cet essai illustre l'art antérieur.

Pour ce faire, on dilue 0,5 kg, calculé en pigment sec, de carbonate de calcium naturel de type marbre norvégien, de granulométrie telle que 65 % en poids des particules ont un diamètre inférieur à 1 micromètre, mesurée au moyen du Sedigraph™ 5100 de la société Micromeritics™, et une surface spécifique BET de 15,5 m²/g (mesurée selon la norme ISO 9277) sous la forme d'une dispersion ou slurry de concentration en matière sèche égale 75 % avec un dispersant de type polyacrylate de sodium, puis on dilue encore avec de l'eau jusqu'à l'obtention d'un slurry d'une concentration en matière sèche de 20 % en poids, dans le conteneur de 10 litres. On traite ensuite le slurry ainsi formé par 20 % d'acide phosphorique en solution à 10 % en poids, à 65°C sous légère agitation avec un débit de 30 1/min. sous pression atmosphérique au fond du conteneur pendant 2 heures. Après 2 heures, on fait barboter du CO₂ au travers de la suspension de carbonate de calcium durant 1 heure.

La charge présente les caractéristiques suivantes :
- Diamètre moyen de grain, analysé par la méthode visuelle sous microscope électronique : environ 3-5 micromètres.
- Surface spécifique BET (mesurée selon la norme ISO 9277) : 41,2 m²/g.

L'annexe 3 représente l'image du pigment obtenu par microscope électronique de type LEO 435VPi de la société LEO Elektronenmikroskopie GmbH.

### Essai n° 4

Cet essai illustre l'art antérieur.

Pour ce faire, on dilue 100 kg, calculés en pigment sec, de carbonate de calcium naturel de type marbre norvégien, de granulométrie telle que 65 % en poids des particules ont un diamètre inférieur à 1 micromètre, mesurée au moyen du Sedigraph™ 5100 de la société Micromeritics™, et une surface spécifique BET de 15 m²/g (mesurée selon la norme ISO 9277) sous la forme d'une dispersion ou slurry de concentration en matière sèche égale à 75 % avec un dispersant du type polyacrylate de sodium, avec de l'eau jusqu'à l'obtention d'un slurry d'une concentration en matière sèche de 10 % en poids, dans le conteneur de 3000 litres. Puis on traite le slurry ainsi formé par 30 % d'acide phosphorique en solution à environ 15 % en poids, à 65°C en continu dans 4 cellules de 25 litres dosant ¼ de l'acide phosphorique dans chaque cellule sous légère agitation et avec un débit de 50 litres/min sous pression atmosphérique au fond de chaque cellule. La rétention du produit dans chacune des cellules était de 15 min.

La charge présente les caractéristiques suivantes :
- Concentration du slurry : environ 20 %
- Diamètre moyen de grain analysé par la méthode visuelle sous microscope électronique : environ 7-10 micromètres,
- Surface spécifique BET (mesurée selon la norme ISO 9277) : 45,7 m²/g.

L'annexe 4 représente l'image du pigment obtenu par microscope électronique de type LEO 435VPi de la société LEO Elektronenmikroskopie GmbH.

### Essai n° 5

Cet essai illustre l'art antérieur.

Pour ce faire, on dilue 5 kg, calculés en pigment sec, de carbonate de calcium naturel de type marbre norvégien, de granulométrie telle que 65 % en poids des particules ont un diamètre inférieur à 1 micromètre, mesurée au moyen du Sedigraph™ 5100 de la société Micromeritics™, et une surface spécifique BET de 15,5 m²/g (mesurée selon la norme ISO 9277) sous la forme d'une dispersion ou slurry de concentration en matière sèche égale 75 % avec un dispersant de type polyacrylate de sodium, puis on dilue encore avec de l'eau jusqu'à l'obtention d'un slurry d'une concentration en matière sèche de 20 % en poids, dans le conteneur de 10 litres. On traite ensuite le slurry ainsi formé par 50 % d'acide phosphorique en solution à 10 % en poids, à 65° sous légère agitation avec un débit de 30 litre/min. sous pression atmosphérique au fond du conteneur pendant 2 heures. Après 2 heures, on fait barboter du CO₂ au travers de la suspension de carbonate de calcium durant 1 heure. 24 heures après, le pigment est séché par un sécheur de type « spray dryer ».

La charge présente les caractéristiques suivantes :
Pour le pigment :
- diamètre moyen de grain, analysé par la méthode visuelle sous microscope électronique : 5 micromètres,
- surface spécifique BET (mesurée selon la norme ISO 9277) : 41.2 m²/g.

L'annexe 5 représente l'image du pigment obtenu par microscope électronique de type LEO 435VPi de la société LEO Elektronenmikroskopie GmbH.

### Essai n° 6

Cet essai illustre l'invention.

On dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6% un polyacrylate de soude, jusqu'à l'obtention d'une suspension aqueuse d'une concentration en matière sèche de 20 % en poids, par de l'eau distillée, dans le conteneur de 10 litres.
Puis on traite la suspension ainsi formée à 65°C par 150 g, calculé en silicate de soude sec, de Stixso RR, PQ Corporation, Valley Forge, PA, USA, un silicate de soude type SiO₂/Na₂O = 3,22 sous forme d'une solution à 30 % d'extrait sec, pendent 30 minutes. Puis on traite la suspension ainsi formée à 65°C par 10 % d'acide phosphorique en solution à 30 % en poids, à 65°C sous agitation pendant 30 minutes à 500 tours par minute.

Ensuite, le pH a été ajusté, entre 8 et 8,5 avec une suspension de chaux à une concentration égale à 10 % en poids sec.
Après 60 minutes d'agitation à 500 tours par minute, le produit a été refroidi à 23°C.

Le pigment minéral obtenu a un extrait sec égal à 18,8%, une surface spécifique BET égale à 39,4 m²/g (mesurée selon la norme ISO 9277) ainsi qu'un pH égal à 8,4 et une quantité de silicate de sodium (soluble dans la phase aqueuse de la suspension), mesurée par Spectroscopie Plasma Inductive - d'Emission Optique (ICP-OES) égale à 220 ppm de Si.

L'annexe 6 représente l'image du pigment obtenu par microscope électronique de type LEO 435VPi de la société LEO Elektronenmikroskopie GmbH.

### Essai n° 7

Cet essai illustre l'invention.

On dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension aqueuse à 75 % d'extrait sec, dispersée avec 0,6% d'un polyacrylate de soude, jusqu'à l'obtention d'une suspension aqueuse d'une concentration en matière sèche de 20 % en poids, par de l'eau distillée, dans le conteneur de 10 litres.
Puis on traite la suspension ainsi formée à 65°C par 150 g, calculé en silicate de soude sec, d' Inosil Na 4237, Van Baerle, CH 4142 Münchenstein, Switzerland, un silicate de soude type SiO₂/Na₂O = 3,29 sous forme d'une solution à 30 % d'extrait sec, pendant 30 minutes. Puis on traite la suspension ainsi formée à 65°C par 10 % d'acide phosphorique en solution à 30 % en poids, à 65°C sous agitation pendant 30 minutes à 500 tours par minute.

Ensuite, le pH a été ajusté, entre 8 et 8,5 avec une suspension de chaux à une concentration égale à 10 % en poids sec.
Après 60 minutes d'agitation à 500 tours par minute, le produit a été refroidi à 23°C.

Le pigment minéral obtenu a un extrait sec égal à 19,1%, une surface spécifique BET égale à 39,9 m2/g (mesurée selon la norme ISO 9277) ainsi qu'un pH égal à 8,6 et une quantité de silicate de sodium (soluble dans la phase aqueuse de la suspension), mesurée par Spectroscopie Plasma Inductive - d'Emission Optique (ICP-OES) égale à 150 ppm de Si.

### Essai n° 8

Cet essai illustre l'invention.

On dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, disperser avec 0,6% d'un polyacrylate de soude, jusqu'à l'obtention d'une suspension aqueuse d'une concentration en matière sèche de 20 % en poids, par de l'eau distillée, dans le conteneur de 10 litres.
Puis on traite la suspension ainsi formé à 65°C par 150 g, calculé en silicate de soude sec, d'Inosil Na 4237, Van Baerle, CH 4142 Münchenstein, Switzerland, un silicate de soude type SiO₂/Na₂O = 3,29 sous forme d'une solution de 30 % d'extrait sec, pendant 2 minutes. Puis on traite la suspension ainsi formée à 65°C par 10 % d'acide phosphorique en solution à 30 % en poids, à 65°C sous agitation pendant 2 minutes à 500 tours par minute.

Ensuite, le pH a été ajusté, entre 8 et 8,5 avec une suspension de chaux à une concentration égale à 10 % en poids sec.

Après 60 minutes d'agitation à 500 tours par minute, le produit a été refroidi à 23°C. Le pigment minéral obtenu a un extrait sec égal à 19,2 %, une surface spécifique BET égale à 46,6 m²/g (mesurée selon la norme ISO 9277) ainsi qu'un pH égal à 8,3 et une quantité de silicate de sodium (soluble dans la phase aqueuse de la suspension), mesurée par Spectroscopie Plasma Inductive - d'Emission Optique (ICP-OES) égale à 140 ppm de Si.

### Essai n° 9

Cet essai illustre l'invention.

On dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6 % d'un polyacrylate de soude, jusqu'à l'obtention d'une suspension aqueuse d'une concentration en matière sèche de 20 % en poids, par de l'eau distillée, dans le conteneur de 10 litres.

Puis on traite la suspension ainsi formé à 65°C par 150 g, calculé en silicate de soude sec, d'Inosil Na 4237, Van Baerle, CH 4142 Münchenstein, Switzerland, un silicate de soude type SiO₂/Na₂O = 3,29 sous forme d'une solution à 30 % d'extrait sec, pendant 30 minutes. Puis on traite la suspension ainsi formée à 65°C par 10 % d'acide phosphorique en solution à 30 % en poids, à 65°C sous agitation pendant 30 minutes à 500 tours par minute.
Ensuite, le pH a été ajusté, entre 8 et 8,5 avec une suspension de chaux à une concentration égale à 10 % en poids sec.

Après 60 minutes d'agitation à 500 tours par minute, le produit a été refroidi à 23°C.

Le pigment minéral obtenu a un extrait sec égal à 18,8%, une surface spécifique BET égale à 71,2 m²/g (mesurée selon la norme ISO 9277) ainsi qu'un pH égal à 8,2 et une quantité de silicate de sodium (soluble dans la phase aqueuse de la suspension), mesurée par Spectroscopie Plasma Inductive - d'Emission Optique (ICP-OES) égale à 170 ppm de Si.

### Essai n° 10

Cet essai illustre l'invention.
On dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6 % d'un polyacrylate de soude, jusqu'à l'obtention d'une suspension aqueuse d'une concentration en matière sèche de 20 % en poids, par de l'eau distillée, dans le conteneur de 10 litres.

Puis on traite la suspension ainsi formé à 65°C par 150 g, calculé en hydroxyde d'aluminium sec, de Martifin OL 107, Martinwerk GmbH, Bergheim, Germany, une poudre d'hydroxyde d'aluminium, sous forme d'une poudre pendant 30 minutes.

Puis on traite la suspension ainsi formé à 65°C par 150 g, calculé en silicate de soude sec, d'Inosil Na 4237, Van Baerle, CH 4142 Münchenstein, Switzerland, un silicate de soude type SiO₂/Na₂O = 3,29 sous forme d'une solution de 30 % d'extrait sec, pendant 30 minutes. Puis on traite la suspension ainsi formée à 65°C par 10 % d'acide phosphorique en solution à 30 % en poids, à 65°C sous agitation pendant 30 minutes à 500 tours par minute.

Ensuite, le pH a été ajusté, entre 8 et 8,5 avec une suspension de chaux à une concentration égale à 10 % en poids sec.

Après 60 minutes d'agitation à 500 tours par minute, le produit a été refroidi à 23°C.

Le pigment minéral obtenu a un extrait sec égal à 19,6%, une surface spécifique BET égale à 39,6 m²/g (mesurée selon la norme ISO 9277) ainsi qu'un pH égal à 8,2.

### Essai n° 11

Cet essai illustre l'invention.

Pour ce faire, on dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6 % d'un polyacrylate de soude, jusqu'à l'obtention d'une suspension aqueuse d'une concentration en matière sèche de 20 % en poids, par de l'eau distillée, dans le conteneur de 10 litres.

Puis on traite la suspension ainsi formé à 65°C par 64,7 g, calculé en silicate d'aluminium, de Zeocross CG 180, Crossfield, Joliet, IL, USA, sous forme d'une solution à 4,3% d'extrait sec dans l'eau destilleé pendent 30 minutes. Puis on traite la suspension ainsi formée à 65°C par 35 % d'acide phosphorique en solution à 30 % en poids, à 65°C sous agitation pendant 30 minutes à 500 tours par minute.

Ensuite, le pH a été ajusté, entre 8 et 8,5 avec une suspension de chaux à une concentration égale à 10 % en poids sec.
Après 60 minutes d'agitation à 500 tours par minute, le produit a été refroidi à 23°C.

Le pigment minéral obtenu a un extrait sec égal à 15,1%, une surface spécifique BET égale à 94,4 m²/g (mesurée selon la norme ISO 9277) ainsi qu'un pH égal à 8,6.

L'annexe 7 représente l'image du pigment obtenu par microscope électronique de type LEO 435VPi de la société LEO Elektronenmikroskopie GmbH.

### Essai n° 12

Cet essai illustre l'invention.

Pour ce faire, on dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6 % d'un polyacrylate de soude, jusqu'à l'obtention d'une suspension aqueuse d'une concentration en matière sèche de 20 % en poids, par de l'eau distillée, dans le conteneur de 10 litres.

Puis on traite la suspension ainsi formée à 70°C par 90 g, calculé en silicate de soude sec, d'Inosil Na 4237, Van Baerle, CH 4142 Münchenstein, Switzerland, un silicate de soude type SiO₂/Na₂O = 3,29 sous forme d'une solution à 30 % d'extrait sec, pendant 30 minutes. En parallèle on traite la suspension ainsi formée à 65°C par 15 % d'acide phosphorique en solution à 30 % en poids, à 65°C sous agitation pendant 60 minutes à 500 tours par minute.

Ensuite, le pH a été ajusté, entre 8 et 8,5 avec une suspension de chaux à une concentration égale à 10 % en poids sec.
Après 60 minutes d'agitation à 500 tours par minute, le produit a été refroidi à 23°C.

Le pigment minéral obtenu a un extrait sec égal à 18,8%, une surface spécifique BET égale à 71,2 m²/g (mesurée selon la norme ISO 9277) ainsi qu'un pH égal à 8,2 et une quantité de silicate de sodium (soluble dans la phase aqueuse de la suspension), mesurée par Spectroscopie Plasma Inductive - d'Emission Optique (ICP-OES) égale à 190 ppm de Si.

### Essai n° 13

Cet essai illustre l'invention.

Pour ce faire, on dilue 1500 g, calculés en pigment sec, de carbonate de calcium naturel de type marbre norvégien, de granulométrie telle que 65 % en poids des particules ont un diamètre inférieur à 1 µm, mesurée au moyen du Sedigraph™ 5100 de la société Micromeritics™, sous forme d'une suspension à 75 % d'extrait sec, dispersée avec 0,6 % d'un polyacrylate de soude, jusqu'à l'obtention d'une suspension d'une concentration en matière sèche de 20 % en poids, par de l'eau distillée, dans le conteneur de 10 litres.

Puis on traite la suspension ainsi formé à 65°C par 150 g, calculé en silicate de soude sec, d'Inosil Na 4237, Van Baerle, CH 4142 Münchenstein, Switzerland, un silicate de soude type SiO₂/Na₂O = 3,29 sous forme d'une solution à 30 % d'extrait sec, pendant 30 minutes. En parallèle on traite la suspension ainsi formée à 65°C par 10 % d'acide phosphorique en solution à 30 % en poids, à 65°C sous agitation pendant 30 minutes à 500 tours par minute.

Ensuite, le pH a été ajusté, entre 8 et 8,5 avec une suspension de chaux à une concentration égale à 10 % en poids sec.
Après 60 minutes d'agitation à 500 tours par minute, le produit a été refroidi à 23°C.

Le pigment minéral obtenu a un extrait sec égal à 18,9%, une surface spécifique BET égale à 40,4 m²/g (mesurée selon la norme ISO 9277) ainsi qu'un pH égal à 8,5 et une quantité de silicate de sodium (soluble dans la phase aqueuse de la suspension), mesurée par Spectroscopie Plasma Inductive - d'Emission Optique (ICP-OES) égale à 220 ppm de Si.

### EXEMPLE 2

Cet exemple illustre l'invention et concerne l'utilisation, en impression par jet d'encre, du pigment selon l'invention comme couchage du papier.

Pour ce faire dans tous les essais de l'exemple, on prépare une sauce de couchage contenant 100 parts du pigment à tester et 12 parts du liant ACRONAL™ S-360D de BASE avec une concentration en poids de matière sèche ajustée à 25 % ± 0,5 %.

On applique ensuite 7 g/m² des différentes sauces de couchage contenant le pigment à tester sur des feuilles de papier Synteape™ d'Arjo-Wiggins à l'aide de la coucheuse de laboratoire Erichsen Modèle 624 de la société Erichsen GmbH.KG équipées de lames roulantes échangeables.

Le papier ainsi couché est séché pendant 30 minutes dans un four à 50°C pour obtenir un poids et un taux d'humidité constants.

L'impression est alors effectuée au moyen d'une imprimante Hewlett-Packard Deskjet 890 C et d'une cartouche d'encre dénommée Black Ink HP45.

On mesure alors visuellement la réduction des bavures d'encre des papiers couchés selon l'invention ainsi que leur meilleure aptitude à ne pas transpercer le papier.

### Essai n° 14

Cet essai illustre l'art antérieur et met en œuvre le pigment de l'essai n° 1 selon l'art antérieur.

L'annexe 8, représente le résultat de l'impression du papier couché avec la sauce de couchage contenant le pigment de l'essai n° 1, et constitue l'essai témoin.

### Essai n° 15

Cet essai illustre l'invention et met en œuvre le pigment de l'essai n° 6 selon l'invention.

L'annexe 9, représente le résultat de l'impression du papier couché avec la sauce de couchage contenant le pigment de l'essai n° 6 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

### Essai n° 16

Cet essai illustre l'invention et met en œuvre le pigment de l'essai n° 7 selon l'invention.

L'annexe 10, représente le résultat de l'impression du papier couché avec la sauce de couchage contenant le pigment de l'essai n° 7 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

### Essai n° 17

Cet essai illustre l'invention et met en œuvre le pigment de l'essai n° 8 selon l'invention.

L'annexe 11, représente le résultat de l'impression du papier couché avec la sauce de couchage contenant le pigment de l'essai n° 8 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

### Essai n° 18

Cet essai illustre l'invention et met en œuvre le pigment de l'essai n° 9 selon l'invention.

L'annexe 12, représente le résultat de l'impression du papier couché avec la sauce de couchage contenant le pigment de l'essai n° 9 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

### Essai n° 19

Cet essai illustre l'invention et met en œuvre le pigment de l'essai n° 10 selon l'invention.

L'annexe 13, représente le résultat de l'impression du papier couché avec la sauce de couchage contenant le pigment de l'essai n° 10 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

### EXEMPLE 3

Cet exemple illustre l'invention et concerne l'utilisation, en impression par jet d'encre, du pigment selon l'invention employé comme charge de masse du papier.

Pour ce faire, on forme les feuilles de papier contenant, comme charge, la suspension du pigment à tester.

Ces feuilles de papier ainsi formées sont alors imprimées au moyen d'une imprimante Hewlett-Packard Deskjet 890 C et d'une cartouche d'encre dénommée Black Ink HP 45.

On détermine ensuite, selon la norme ISO 2469 et au moyen d'un spectrophotomètre Elrepho™ 2000 (Datacolor) la blancheur R457 mesurée au verso de la page imprimée et correspondant à un rayonnement lumineux de longueur d'onde égale à 457 nm.

### Essai n° 20

Cet essai illustre l'art antérieur et sert de témoin.

Dans ce but, on réalise les feuilles de papier à partir d'une pulpe ou pâte de cellulose de degré SR 23 contenant une pâte au sulfate de bois et des fibres constituées à 80 % de bouleau et 20 % de pin. On dilue alors 45 g sec de cette pulpe ou pâte dans 10 litres d'eau en présence de environ 15 g sec de la composition de charges à tester pour obtenir expérimentalement une teneur en charge de 20 % à 0,5 % près. Après 15 minutes d'agitation et l'ajout de 0,06 % en poids sec par rapport au poids sec de papier, d'un agent rétenteur du type polyacrylamide, on forme une feuille de grammage égal à 75 g/m² et chargée à (20 +/- 0,5) %. Le dispositif mis en œuvre pour former la feuille est un système Rapid-Köthen modèle 20.12 MC de la Société Haage.

Les feuilles ainsi formées sont séchées pendant 400 secondes à 92°C et un vide de 940 mbar. La teneur en charge est contrôlée par analyse des cendres.
La feuille ainsi formée, on en mesure l'épaisseur.

L'épaisseur du papier ou de la feuille de carton représente la distance perpendiculaire entre les deux surfaces parallèles.

Les échantillons sont conditionnés durant 48 heures (norme allemande DIN EN 20187).

Cette norme précise que le papier est une substance hygroscopique et, en tant que telle, présente la caractéristique d'être capable d'adapter sa teneur en humidité afin de la rendre appropriée par rapport à celle de l'air environnant. L'humidité est absorbée lorsque l'air ambiant subit une augmentation d'humidité et est au contraire évacuée lorsque l'air ambiant subit une diminution d'humidité.

Même si l'humidité relative reste à un niveau constant, la teneur en humidité du papier ne reste pas nécessairement égale si la température n'est pas maintenue constante dans certaines limites. Lors d'une augmentation ou d'une diminution de la teneur en humidité, les propriétés physiques du papier sont modifiées.

Pour cette raison, on doit conditionner les échantillons durant au moins une période de 48 heures, jusqu'à ce que l'on atteigne un équilibre. Les échantillons sont également testés sous des conditions climatiques identiques.
Le climat d'essai pour le papier a été établi de manière à correspondre aux données suivantes :
Humidité relative : 50 % (+/- 3)
Température : 23°C (+/-1)

Les résultats obtenus sont:
Taux de pigment : 29,3 % en poids,
Poids de la feuille de papier : 80 g/m²
Blancheur R 457 selon la méthode précitée : 75,5 %

### Essai n° 21

Cet essai illustre l'art antérieur et sert de témoin.

Pour ce faire, avec le même mode opératoire et le même matériel que ceux de l'essai n° 20, on forme les feuilles de papier contenant, comme charge, la suspension de carbonate de calcium de l'essai n° 2.

Les résultats obtenus sont:
Taux de pigment : 27,3 % en poids,
Poids de la feuille de papier : 79 g/m²
Blancheur R 457 selon la méthode précitée : 75,9 %

### Essai n° 22

Cet essai illustre l'invention.

Pour ce faire, avec le même mode opératoire et le même matériel que ceux de l'essai n° 20, on forme les feuilles de papier contenant, comme charge, la suspension de carbonate de calcium de l'essai n° 12.

Les résultats obtenus sont :
Taux de pigment : 27,8 % en poids,
Poids de la feuille de papier : 82 g/m²
Blancheur R 457 selon la méthode précitée : 79,5 %

La blancheur obtenue est nettement meilleure que celle de l'essai n° 21 de l'art antérieur.

### Essai n° 23

Cet essai illustre l'invention.

Pour ce faire, avec le même mode opératoire et le même matériel que ceux de l'essai n° 20, on forme les feuilles de papier contenant, comme charge, la suspension de carbonate de calcium de l'essai n° 13.

Les résultats obtenus sont :
Taux de pigment : 29 % en poids,
Poids de la feuille de papier : 81 g/m²
Blancheur R 457 selon la méthode précitée : 77,3 %

La blancheur obtenue est nettement meilleure que celle de l'essai n° 21 de l'art antérieur.

### EXEMPLE 4

Cet exemple illustre l'invention et concerne l'utilisation, en impression par jet d'encre, du pigment selon l'invention employé comme couchage du papier et comme charge de masse du papier.

### Essai n° 24

Cet essai illustre l'invention et utilise pour le couchage le même mode opératoire et le même matériel que ceux mis en œuvre dans l'exemple 2.

De manière similaire pour la charge du papier, on forme, avec le même mode opératoire et le même matériel que ceux de l'essai n° 20, les feuilles de papier contenant, comme charge, la suspension de carbonate de calcium de l'essai n° 11.

Pour le couchage, l'annexe 14, représente le résultat de l'impression du papier couché avec la sauce de couchage contenant le pigment de l'essai n° 11 et montre que l'impression est nettement meilleure que celle du témoin obtenue avec le pigment de l'essai n° 1, à savoir qu'elle montre que la densité d'impression est supérieure à celle du témoin, c'est-à-dire qu'il y a une réduction des bavures d'encre et que l'encre transperce moins le papier après impression.

Les résultats obtenus sont :
Blancheur R 457 selon la méthode précitée : 79,3 %

La blancheur obtenue est nettement meilleure que celle de l'essai n° 21 de l'art antérieur.

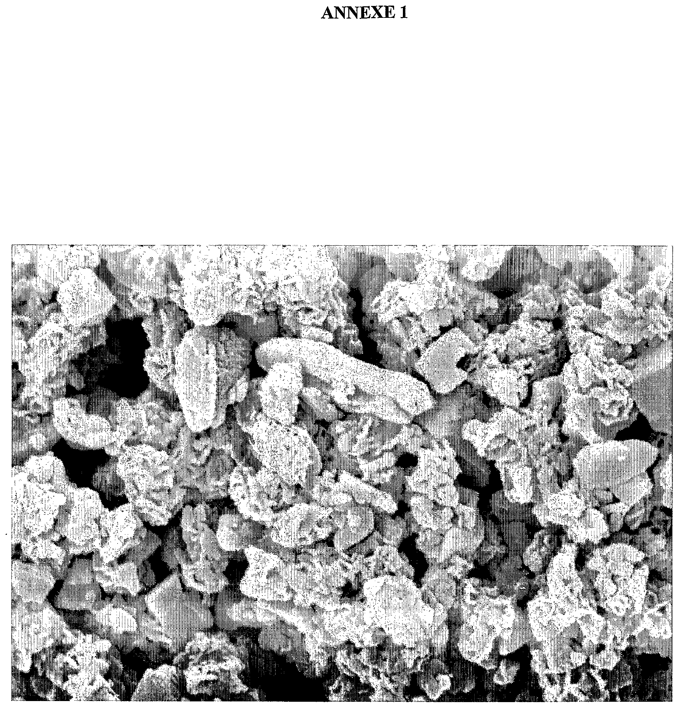

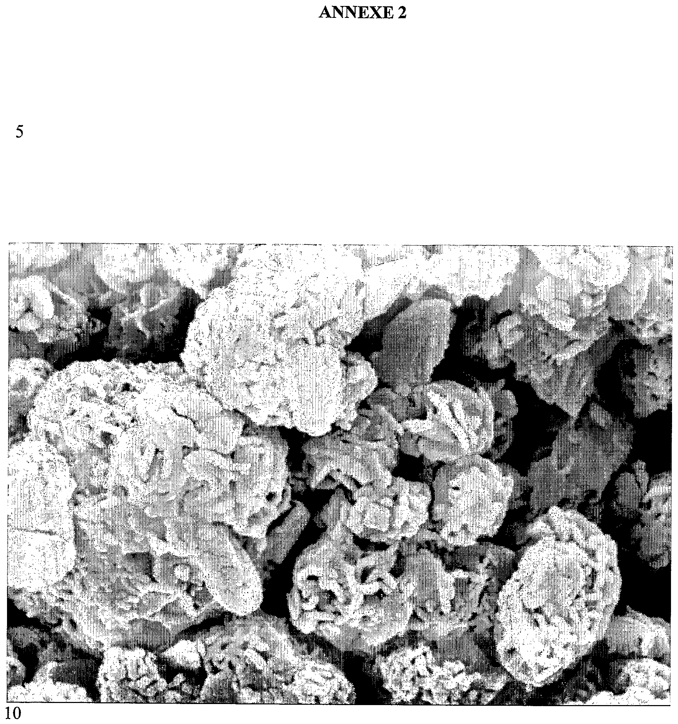

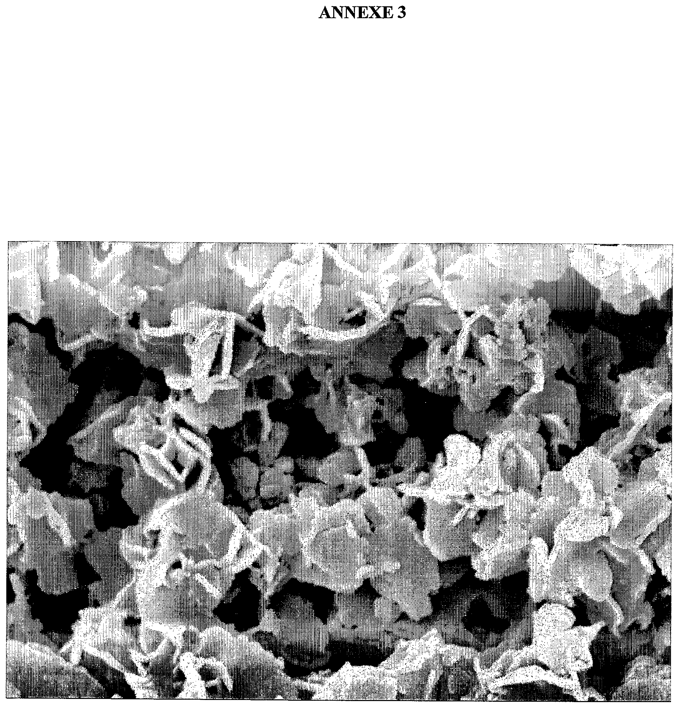

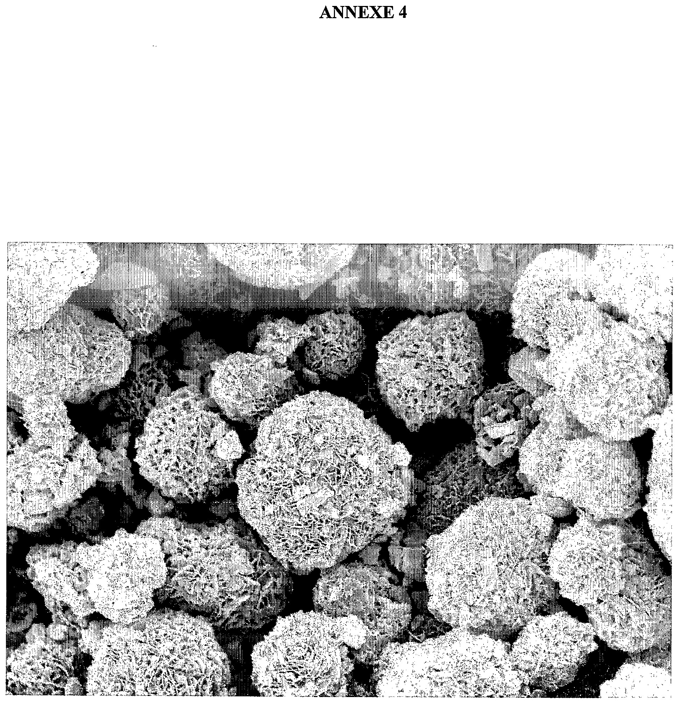

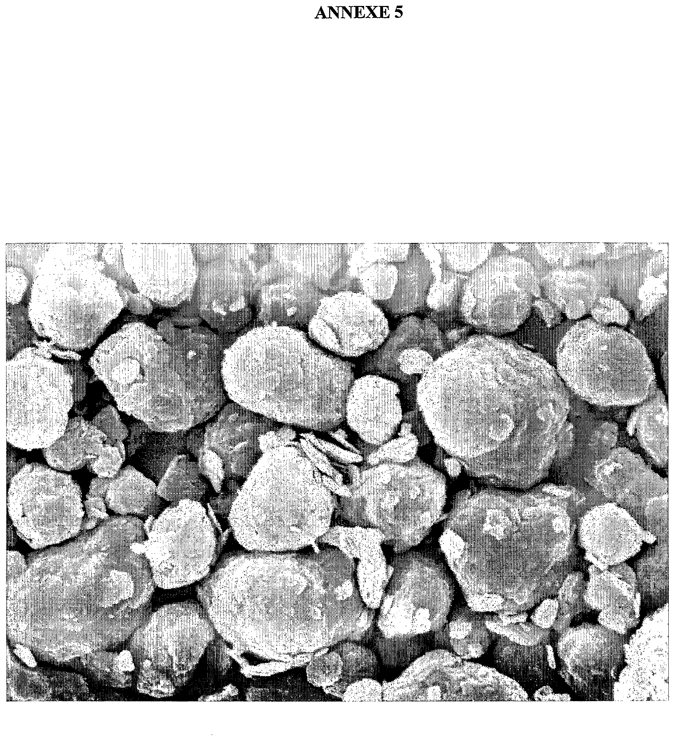

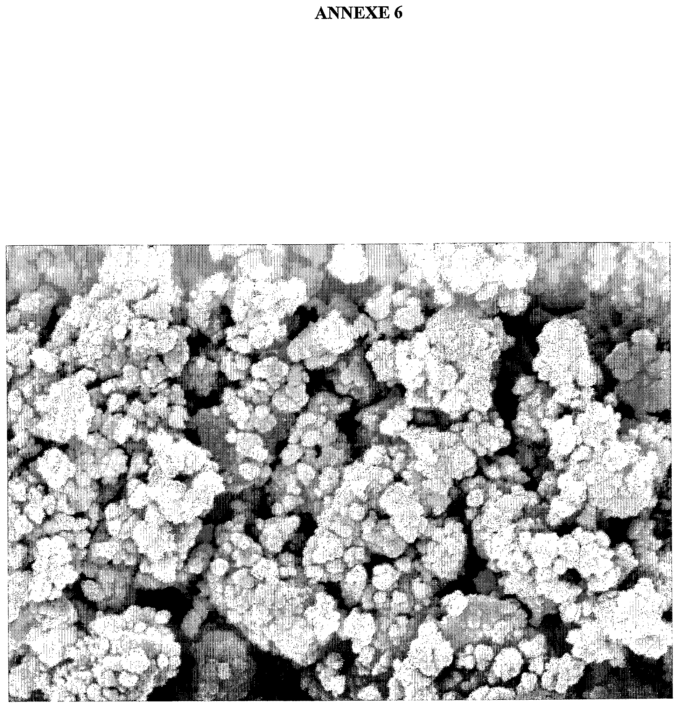

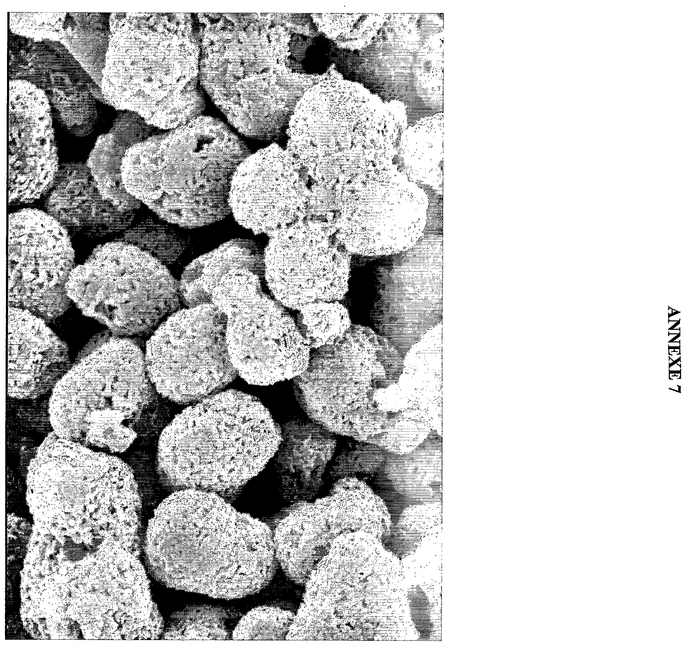

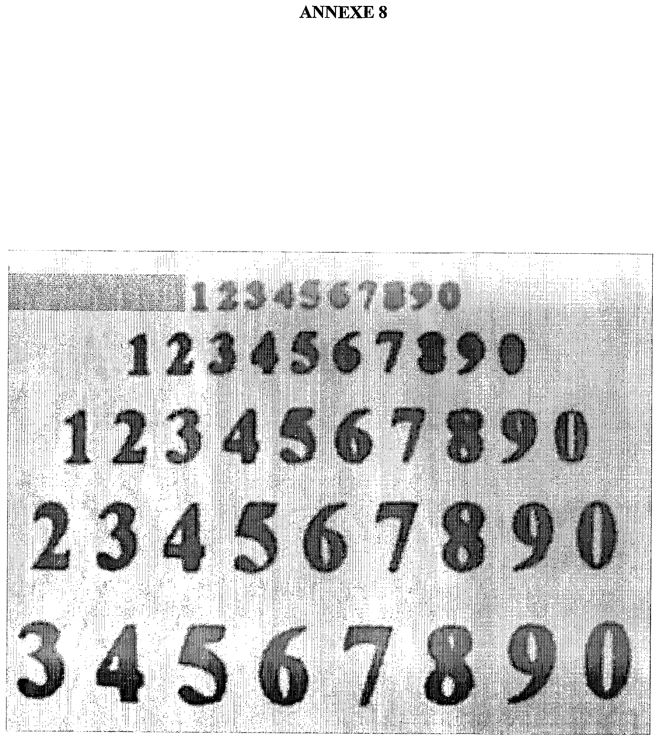

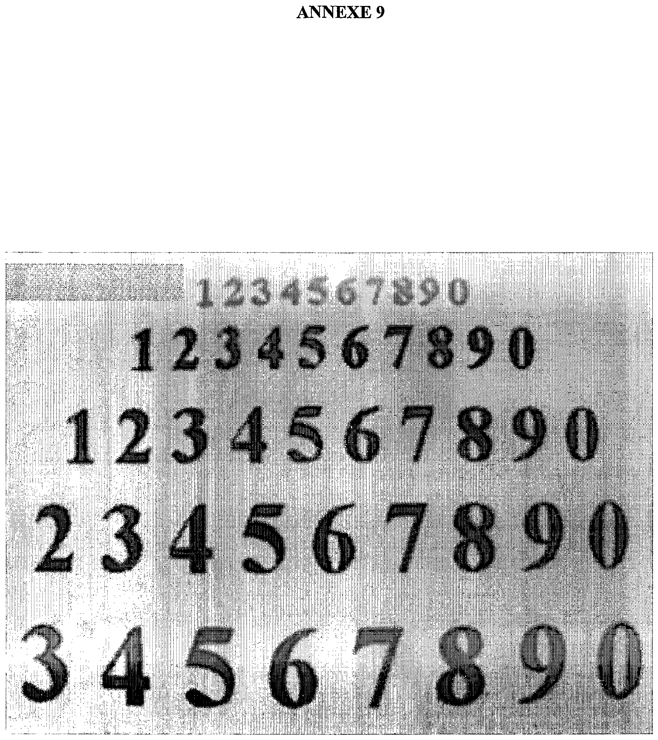

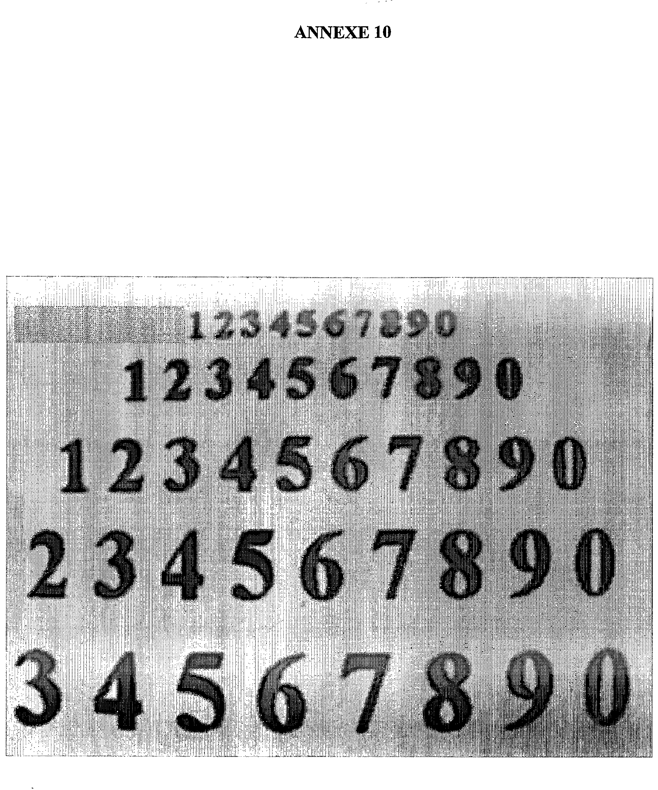

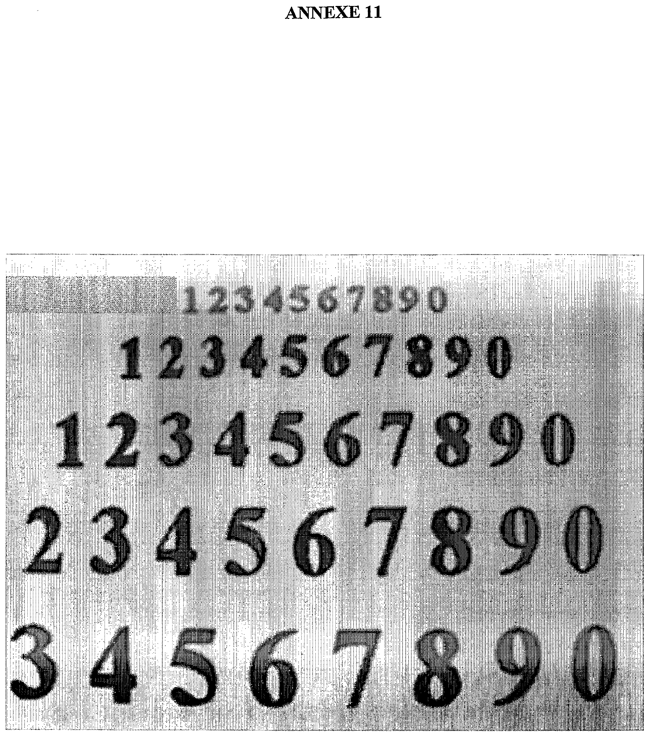

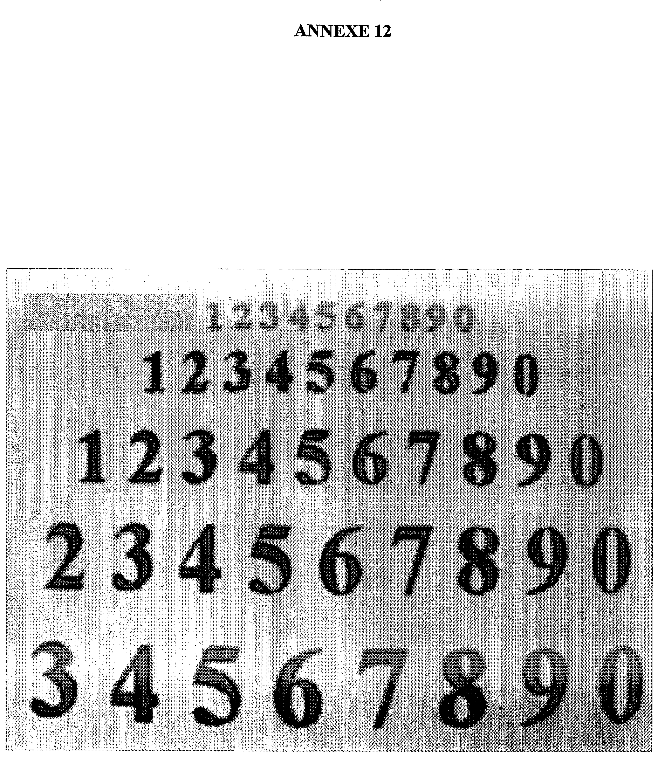

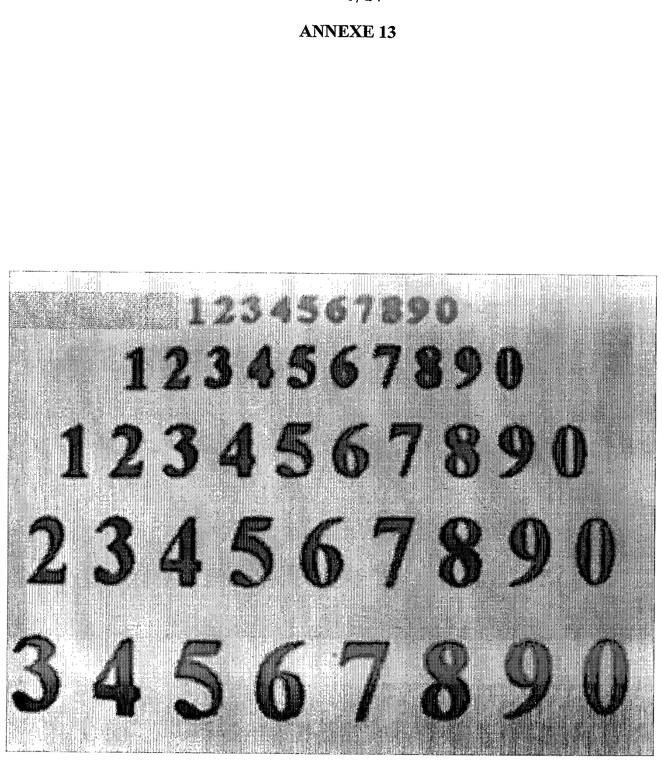

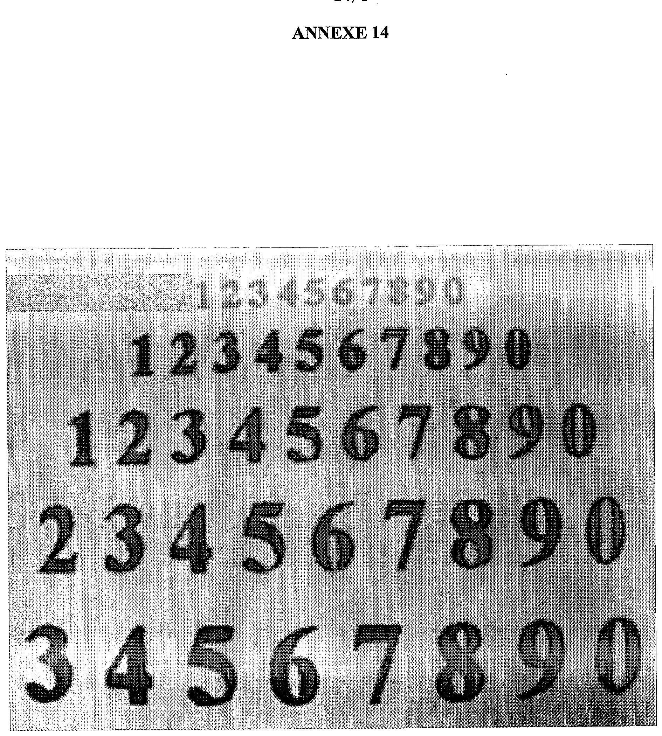

## Revendications

1. Pigment minéral contenant du carbonate de calcium **caractérisé en ce qu'**il contient un produit formé in situ par la double et/ou multi réaction entre
un carbonate de calcium et le ou les produits de réaction dudit carbonate avec du CO₂ gazeux formé in situ et/ou provenant d'une alimentation externe, et
le ou les produits de réaction dudit carbonate avec un ou plusieurs donneurs d'ions H₃O⁺ moyennement forts, c'est-à-dire ayant un pKₐ compris entre 0 et 2,5 inclus à 22°C à forts c'est-à-dire ayant un pKₐ inférieur ou égal à zéro à 22°C et au moins un silicate d'aluminium et/ou
au moins une silice synthétique et/ou
au moins un silicate de calcium et/ou
au moins un silicate d'un sel monovalent et
éventuellement au moins un hydroxyde d'aluminium et/ou
éventuellement au moins un aluminate de sodium et/ou de potassium, et
**en ce qu'**il contient moins de 0,1 % en poids de silicate d'un sel monovalent par rapport au poids sec de carbonate de calcium, et
**caractérisé en ce qu'**il a un pH supérieur à 7,5 mesuré à 20°C ;
**caractérisé en ce que** le pigment minéral a une surface spécifique BET comprise entre 25 m²/g et 200 m²/g mesurée selon la norme ISO 9277.

2. Pigment minéral selon la revendication 1, **caractérisé en ce que** ledit silicate d'un sel monovalent est le silicate de sodium, de potassium ou de lithium ou leurs mélanges.

3. Pigment minéral selon la revendication 1 ou 2, **caractérisé en ce que** le carbonate de calcium est un carbonate de calcium naturel ou un mélange de carbonate de calcium naturel avec du talc, du kaolin, du dioxyde de titane, de l'oxyde de magnésium ou avec tout minéral inerte vis-à-vis des donneurs d'ions H₃O⁺ moyennement forts à forts.

4. Pigment minéral selon la revendication 3, **caractérisé en ce que** le carbonate de calcium naturel est choisi parmi un marbre, une calcite, une craie, une dolomite ou leurs mélanges.

5. Pigment minéral selon l'une des revendications 1 à 4, **caractérisé en ce que** le ou les donneurs d'ions H₃O⁺ moyennement forts à forts sont choisis parmi les acides moyennement forts à forts, ou leurs mélanges générant des ions H₃O⁺.

6. Pigment minéral selon l'une des revendications 1 à 5 **caractérisé en ce que** les acides forts sont préférentiellement choisis parmi les acides ayant un pKa inférieur ou égal à zéro à 22°C et plus particulièrement choisis parmi l'acide sulfurique, l'acide chlorhydrique ou leurs mélanges et **caractérisé en ce que** le ou les donneurs d'ions H₃O⁺ moyennement forts sont choisis parmi les acides ayant un pKa compris entre 0 et 2,5 inclus à 22°C et plus particulièrement choisis parmi H₂SO₃, HSO₄⁻, H₃PO₄, l'acide oxalique ou leurs mélanges, et encore plus préférentiellement parmi les acides formant des sels de cation bivalent, comme le calcium, presque insolubles dans l'eau, c'est-à-dire de solubilité inférieure à 0,01 % en masse.

7. Pigment minéral selon l'une quelconque des revendications 1 à 6, **caractérisé en ce qu'**il a une surface spécifique BET comprise 30 m²/g et 80 m²/g mesurée selon la norme ISO 9277, et très préférentiellement entre 35 m²/g et 60 m²/g ainsi qu'un diamètre médian, déterminé par une mesure au Sedigraph™ 5100, compris entre 0,1 et 50 micromètres, préférentiellement compris entre 0,5 et 40 micromètres et très préférentiellement entre 1 et 10 micromètres.

8. Suspension aqueuse de pigment minéral **caractérisée en ce qu'**elle contient le pigment minéral selon l'une quelconque des revendications 1 à 7.

9. Procédé de fabrication d'un pigment minéral selon l'une quelconque des revendications 1 à 7, **caractérisé en ce qu'**il comporte les étapes suivantes :
a) le traitement du carbonate de calcium en phase aqueuse par
i) le ou les donneurs d'ions H₃O⁺ moyennement forts à forts,
ii) le CO₂ gazeux formé in situ et/ou provenant d'une alimentation externe,
b) l'addition d'au moins un silicate d'aluminium et/ou d'au moins une silice synthétique et/ou d'au moins un silicate de calcium et/ou d'au moins un silicate d'un sel monovalent
dans lequel l'étape b) se déroule avant et/ou simultanément avec, l'étape a), et
**caractérisé en ce qu'**entre une heure et vingt-quatre heures après la fin du traitement, le pH est supérieur à 7,5 mesuré à 20°C et
**caractérisé en ce que** le pigment minéral a une surface spécifique BET comprise entre 25 m²/g et 200 m²/g mesurée selon la norme ISO 9277, **caractérisé en ce que** la quantité en mole de donneurs d'ions H₃O⁺ moyennement forts à forts par rapport au nombre de moles de CaCO₃ est au total comprise entre 0,05 et 1, préférentiellement entre 0,1 et 0,5.

10. Procédé de fabrication d'un pigment minéral selon la revendication 9, **caractérisé en ce que** l'étape b) comprend de plus l'addition antérieure et/ou simultanée d'un aluminate de sodium et/ou potassium.

11. Procédé de fabrication d'un pigment minéral selon la revendication 9 à 10, **caractérisé en ce qu'**il comprend de plus une étape c)
d'ajout d'une base, préférentiellement d'une base à ion bivalent, très préférentiellement de la chaux et/ou du carbonate de calcium sous forme sèche ou en suspension aqueuse contenant éventuellement un ou plusieurs dispersants anioniques, cationiques et/ou faiblement anioniques.

12. Procédé de fabrication d'un pigment minéral selon l'une quelconque des revendications 9 à 11, **caractérisé en ce qu'**il comprend de plus une étape d) de mise en suspension aqueuse anionique ou cationique ou faiblement anionique du produit obtenu dans l'étape b) ou c) à une concentration en matière sèche comprise entre 1 % et 80 % à l'aide éventuellement d'au moins un électrolyte anionique ou e) cationique ou f) faiblement anionique.

13. Procédé de fabrication d'un pigment minéral selon l'une quelconque des revendications 9 à 12, **caractérisé en ce qu'**il comprend de plus une étape g) de séchage après l'une des étapes décrite dans les revendications 11 à 12.

14. Procédé de fabrication d'un pigment minéral selon la revendication 9, **caractérisé en ce qu'**il comprend l'ajout d'une base, préférentiellement d'une base à ion bivalent, très préférentiellement de la chaux et/ou du carbonate de calcium sous forme sèche ou en suspension aqueuse contenant éventuellement un ou plusieurs dispersants anioniques, cationiques et/ou faiblement anioniques.

15. Procédé de fabrication d'un pigment minéral selon la revendication 14, **caractérisé en ce que** le carbonate de calcium est un carbonate de calcium naturel, ce carbonate de calcium naturel est choisi parmi un marbre, une calcite, une craie, une dolomite ou leurs mélanges.

16. Procédé de fabrication d'un pigment minéral selon l'une des revendications 9 à 15 **caractérisé en ce que** le ou les donneurs d'ions H₃O⁺ moyennement forts à forts sont choisis parmi les acides moyennement forts à forts, ou leurs mélanges générant des ions H₃O⁺.

17. Procédé de fabrication d'un pigment minéral selon l'une des revendications 9 à 16 **caractérisé en ce que** les acides forts sont préférentiellement choisis parmi les acides ayant un pKₐ inférieur ou égal à zéro à 22°C et plus particulièrement choisis parmi l'acide sulfurique, l'acide chlorhydrique ou leurs mélanges et **caractérisé en ce que** le ou les donneurs d'ions H₃O⁺ moyennement forts sont choisis parmi les acides ayant un pKa compris entre 0 et 2,5 inclus à 22°C et plus particulièrement choisis parmi H₂SO₃, HSO₄⁻, H₃PO₄, l'acide oxalique ou leurs mélanges, et encore plus préférentiellement parmi les acides formant des sels de cation bivalent, comme le calcium, presque insolubles dans l'eau, c'est-à-dire de solubilité inférieure à 0,01 % en masse.

18. Procédé de fabrication d'un pigment minéral selon l'une des revendications 9 à 17 **caractérisé en ce que** le ou les acides forts pourront être mélangés à l'acide ou aux acides moyennement forts.

19. Procédé de fabrication d'un pigment minéral selon l'une revendications 9 à 18 **caractérisé en ce que** la quantité en mole de donneurs d'ions H₃O⁺ moyennement forts à forts par rapport au nombre de moles de CaCO₃ est au total comprise entre 0,05 et 1, préférentiellement entre 0,1 et 0,5.

20. Procédé de fabrication d'un pigment minéral selon l'une des revendications 9 à 19 **caractérisé en ce que** l'étape a) et/ou l'étape b) peuvent être répétées plusieurs fois.

21. Procédé de fabrication d'un pigment minéral selon l'une des revendications 9 à 20 **caractérisé en ce que** la température pendant l'étape a) du traitement est comprise entre 5°C et 100°C, et préférentiellement entre 65°C et 90°C.

22. Procédé de fabrication d'un pigment minéral selon la revendication 21 **caractérisé en ce que** la durée des étapes a) à c) du traitement dure de 0,01 heure à 24 heures.

23. Procédé de fabrication d'un pigment minéral selon la revendication 22 **caractérisé en ce que** la durée des étapes a) à c) du traitement dure de 0,2 heures à 6 heures.

24. Procédé de fabrication d'un pigment minéral selon l'une des revendications 9 à 23 **caractérisé en ce qu'**il est mis en œuvre en phase aqueuse à des concentrations en matière sèche faibles, moyennement fortes ou fortes, de manière préférentielle, pour une teneur en matière sèche comprise entre 0,3 % et 80 % en poids, très préférentiellement entre 15 % et 60 %.

25. Procédé de fabrication d'un pigment minéral selon l'une des revendications 9 à 24 **caractérisé en ce que** l'étape b) est une addition de 0,1 % à 25 %, préférentiellement de 5 à 10 % en poids sec par rapport au poids sec de carbonate de calcium.

26. Procédé de fabrication d'un pigment minéral selon l'une des revendications 9 à 25 **caractérisé en ce que** l'étape d) met en œuvre de 0,05 % à 5,0 % en poids sec d'un électrolyte anionique choisi parmi les homopolymères ou copolymères à l'état acide non neutralisé, partiellement neutralisé ou totalement neutralisé, des monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges, ou encore les polyphosphates.

27. Procédé de fabrication d'un pigment minéral selon l'une des revendications 9 à 26 **caractérisé en ce que** l'étape e) met en œuvre, de 0,05 % à 5,0 % en poids sec d'un électrolyte cationique choisi parmi les homopolymères ou copolymères des monomères cationiques ou ammonium quaternaire à insaturation éthylénique tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium.

28. Procédé de fabrication d'un pigment minéral selon l'une des revendications 9 à 27 **caractérisé en ce que** l'étape f) met en œuvre, de 0,05 % à 5,0 % en poids sec d'un électrolyte faiblement anionique choisi parmi les copolymères faiblement ioniques et hydrosolubles se composant :
a) d'au moins un monomère anionique et à fonction carboxylique ou dicarboxylique ou phosphorique ou phosphonique ou sulfonique ou leur mélange,
b) d'au moins un monomère non ionique, le monomère non ionique étant constitué d'au moins un monomère de formule (I) : 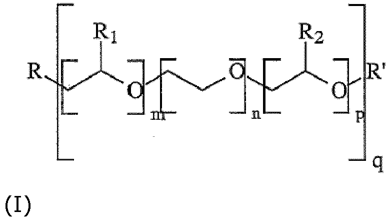 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R1 représente l'hydrogène ou le radical méthyle ou éthyle,
- R2 représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
d) éventuellement d'au moins un monomère possédant au moins deux insaturations éthyléniques appelé dans la suite de la demande monomère réticulant.

29. Suspension aqueuse du pigment minéral selon l'une quelconque des revendications 1 à 7 obtenue en utilisant l'étape d) de la revendication 12 et 26 **caractérisée en ce que** le pigment minéral a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu'un diamètre médian, déterminé par une mesure au Sedigraph™ 5100, compris entre 0,1 et 50 micromètres, préférentiellement compris entre 0,5 et 40 micromètres et très préférentiellement entre 1 et 10 micromètres, et **en ce que** la suspension a une teneur en matière sèche comprise entre 0,3 % et 80 %, préférentiellement entre 15 % et 60 % et **en ce qu'**elle contient de 0,05% à 5,0 % en poids sec, par rapport au poids sec de carbonate de calcium, d'au moins un électrolyte anionique.

30. Suspension aqueuse selon la revendication 29 **caractérisé en ce que** l'électrolyte anionique est choisi parmi les homopolymères ou copolymères à l'état acide non neutralisé, partiellement neutralisé ou totalement neutralisé, des monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges, ou encore les polyphosphates.

31. Suspension aqueuse du pigment minéral selon l'une quelconque des revendications 1 à 7 obtenue selon l'étape e) de la revendication 12 **caractérisée en ce que** le pigment minéral a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu'un diamètre médian, déterminé par une mesure au Sedigraph™ 5100, compris entre 0,1 et 50 micromètres, préférentiellement compris entre 0,5 et 40 micromètres et très préférentiellement entre 1 et 10 micromètres, et **en ce que** la suspension a une teneur en matière sèche comprise entre 0.3 % et 80 %, préférentiellement entre 15 % et 60 %, et **en ce qu'**elle contient de 0,1 % à 5,0 % en poids sec, par rapport au poids sec de carbonate de calcium, d'au moins un électrolyte cationique.

32. Suspension aqueuse selon la revendication 31 **caractérisé en ce que** l'électrolyte cationique est choisi parmi les électrolytes cationiques selon la revendication 30.

33. Suspension aqueuse du pigment minéral selon l'une quelconque des revendications 1 à 7 obtenue selon l'étape f) de la revendication 12 **caractérisée en ce que** le pigment minéral a une surface spécifique BET comprise entre 25 m²/g et 200 m²/g mesurée selon la norme ISO 9277, préférentiellement entre 30 m²/g et 80 m²/g et très préférentiellement entre 35 m²/g et 60 m²/g ainsi qu'un diamètre médian, déterminé par une mesure au Sedigraph™ 5100, compris entre 0,1 et 50 micromètres, préférentiellement compris entre 0,5 et 40 micromètres et très préférentiellement entre 1 et 10 micromètres, et **en ce que** la suspension a une teneur en matière sèche comprise entre 0,3 % et 80 %, préférentiellement entre 15 % et 60 %, et **en ce qu'**elle contient de 0,05 % à 5,0 % en poids sec, par rapport au poids sec de carbonate de calcium, d'au moins un électrolyte faiblement anionique.

34. Suspension aqueuse selon la revendication 33 **caractérisé en ce que** l'électrolyte faiblement anionique est choisi parmi les électrolytes faiblement anioniques selon la revendication 31.

35. Pigment minéral selon l'une quelconque des revendications 1 à 7 **caractérisé en ce qu'**il est sous forme sèche lorsque l'étape g) du procédé selon la revendication 13 est mise en œuvre.

36. Utilisation du pigment minéral selon l'une quelconque des revendications 1 à 7, et 35 comme charge de masse dans la fabrication même de la feuille de papier non couché et/ou comme support de formulation de couchage dans les opérations de traitement de surface du papier et/ou de couchage du papier.

37. Utilisation de la suspension aqueuse selon l'une quelconque des revendications 8 et 29 à 34 comme charge de masse dans la fabrication même de la feuille de papier non couché et/ou comme support de formulation de couchage dans les opérations de traitement de surface du papier et/ou de couchage du papier.

38. Papier pour impression par jet d'encre **caractérisé en ce qu'**il contient le pigment minéral selon l'une quelconque des revendications 1 à 7, et 35 dans la masse et/ou dans le couchage.

39. Papier pour impression par jet d'encre **caractérisé en ce qu'**il contient la suspension aqueuse selon l'une quelconque des revendications 8 et 29 à 34 dans la masse et/ou dans le couchage.

## Patentansprüche

1. Mineralisches Pigment, das Calciumcarbonat enthält, **dadurch gekennzeichnet, dass** es ein Produkt enthält, das in situ gebildet wird durch die Doppel- und/oder Mehrfachreaktion zwischen einem Calciumcarbonat und dem oder den Reaktionsprodukten dieses Carbonats mit gasförmigem CO₂, welches in situ gebildet wird und/oder extern zugeführt wird, sowie dem oder den Reaktionsprodukten dieses Carbonats mit einem oder mehreren mittelstarken, das heißt bei 22 °C eine pKₐ im Bereich zwischen einschließlich 0 und 2,5 aufweisenden, bis starken, das heißt bei 22 °C eine pKₐ von kleiner oder gleich Null aufweisenden H₃O⁺-Ionendonatoren und
mindestens einem Aluminiumsilikat und/oder
mindestens einem synthetischen Siliciumdioxid und/oder
mindestens einem Calciumsilicat und/oder
mindestens einem Silicat eines einwertigen Salzes und
gegebenenfalls mindestens einem Aluminiumhydroxid und/oder
gegebenenfalls mindestens einem Natrium- und/oder Kaliumaluminat, und
dadurch, dass es auf das Calciumcarbonat-Trockengewicht bezogen weniger als 0,1 Gewichts-% Silicat eines einwertigen Salzes enthält, und
**dadurch gekennzeichnet, dass** es bei 20 °C gemessen einen pH-Wert von mehr als 7,5 aufweist;
**dadurch gekennzeichnet, dass** das mineralische Pigment nach der Norm ISO 9277 gemessen eine spezifische BET-Oberfläche im Bereich zwischen 25 m²/g und 200 m²/g aufweist.

2. Mineralisches Pigment nach Anspruch 1, **dadurch gekennzeichnet, dass** das Silicat eines einwertigen Salzes Natrium-, Kalium- oder Lithiumsilicat oder deren Mischungen ist.

3. Mineralisches Pigment nach Anspruch 1 oder 2, **dadurch gekennzeichnet, dass** das Calciumcarbonat ein natürliches Calciumcarbonat oder eine Mischung von natürlichem Calciumcarbonat mit Talkum, Kaolin, Titandioxid, Magnesiumoxid oder mit jedem Mineral ist, das gegenüber mittelstarken bis starken H₃O⁺-Ionendonatoren inert ist.

4. Mineralisches Pigment nach Anspruch 3, **dadurch gekennzeichnet, dass** das natürliche Calciumcarbonat aus einem Marmor, einem Calcit, einer Kreide, einem Dolomit oder deren Mischungen ausgewählt ist.

5. Mineralisches Pigment nach einem der Ansprüche 1 bis 4, **dadurch gekennzeichnet, dass** der oder die mittelstarken bis starken H₃O⁺-Ionendonatoren aus den mittelstarken bis starken Säuren oder deren Mischungen ausgewählt sind, die H₃O⁺-Ionen erzeugen.

6. Mineralisches Pigment nach einem der Ansprüche 1 bis 5, **dadurch gekennzeichnet, dass** die starken Säuren vorzugsweise aus den Säuren ausgewählt sind, die bei 22 °C eine pKa von kleiner oder gleich Null aufweisen, und insbesondere aus Schwefelsäure, Salzsäure oder deren Mischungen ausgewählt sind, und **dadurch gekennzeichnet, dass** der oder die mittelstarken H₃O⁺-Ionendonatoren aus den Säuren ausgewählt sind, die bei 22 °C eine pKa im Bereich zwischen einschließlich 0 und 2,5 aufweisen, und insbesondere aus H₂SO₃, HSO₄⁻, H₃PO₄, Oxalsäure oder deren Mischungen ausgewählt sind, und noch bevorzugter aus den Säuren, die Salze mit zweiwertigem Kation bilden, wie etwa Calcium, die in Wasser nahezu unlöslich sind, das heißt eine Löslichkeit von kleiner als 0,01 Massen-% aufweisen.

7. Mineralisches Pigment nach einem der Ansprüche 1 bis 6, **dadurch gekennzeichnet, dass** es nach der Norm ISO 9277 gemessen eine spezifische BET-Oberfläche im Bereich von 30 m²/g und 80 m²/g, und besonders bevorzugt zwischen 35 m²/g und 60 m²/g, sowie einen mittleren Durchmesser, durch eine Messung im Sedigraph™ 5100 bestimmt, im Bereich zwischen 0,1 und 50 Mikrometer, vorzugsweise im Bereich zwischen 0,5 und 40 Mikrometer, und besonders bevorzugt zwischen 1 und 10 Mikrometer aufweist.

8. Wässrige Aufschlämmung eines mineralischen Pigments, **dadurch gekennzeichnet, dass** sie das mineralische Pigment nach einem der Ansprüche 1 bis 7 enthält.

9. Verfahren zur Herstellung eines mineralischen Pigments nach einem der Ansprüche 1 bis 7, **dadurch gekennzeichnet, dass** es die folgenden Schritte hat:
a) das Behandeln des Calciumcarbonats in wässriger Phase mit
i) dem oder den mittelstarken bis starken H₃O⁺-Ionendonatoren,
ii) dem in situ gebildeten und/oder aus einer externen Zuführung stammenden gasförmigem CO₂,
b) das Zusetzen mindestens eines Aluminiumsilicats und/oder mindestens eines synthetischen Siliciumdioxids und/oder mindestens eines Calciumsilicats und/oder mindestens eines Silicats eines einwertigen Salzes,
wobei der Schritt b) vor und/oder gleichzeitig mit dem Schritt a) abläuft, und
**dadurch gekennzeichnet, dass** zwischen einer Stunde und vierundzwanzig Stunden nach dem Ende der Behandlung der bei 20 °C gemessene pH-Wert mehr als 7,5 beträgt, und
**dadurch gekennzeichnet, dass** das mineralische Pigment nach der Norm ISO 9277 gemessen eine spezifische BET-Oberfläche im Bereich zwischen 25 m²/g und 200 m²/g aufweist,
**dadurch gekennzeichnet, dass** die Molmenge an mittelstarken bis starken H₃O⁺-Ionendonatoren auf die CaCO₃-Molanzahl bezogen insgesamt im Bereich zwischen 0,05 und 1, vorzugsweise zwischen 0,1 und 0,5 liegt.

10. Verfahren zur Herstellung eines mineralischen Pigments nach Anspruch 9, **dadurch gekennzeichnet, dass** der Schritt b) darüber hinaus das vorgeschaltete und/oder gleichzeitige Zusetzen eines Natrium- und/oder Kaliumaluminats umfasst.

11. Verfahren zur Herstellung eines mineralischen Pigments nach Anspruch 9 bis 10, **dadurch gekennzeichnet, dass** es darüber hinaus einen Schritt c) des Zugebens einer Base, vorzugsweise einer Base mit zweiwertigem Ion, besonders bevorzugt von Kalk und/oder Calciumcarbonat in trockener Form oder in wässriger Aufschlämmung umfasst, die gegebenenfalls ein oder mehrere anionische, kationische und/oder schwach anionische Dispergiermittel enthält.

12. Verfahren zur Herstellung eines mineralischen Pigments nach einem der Ansprüche 9 bis 11, **dadurch gekennzeichnet, dass** es darüber hinaus einen Schritt d) des anionischen oder kationischen oder schwach anionischen wässrigen Aufschlämmens des im Schritt b) oder c) erhaltenen Produkts mit einer Trockensubstanzkonzentration im Bereich zwischen 1 % und 80 %, gegebenenfalls mit Hilfe mindestens eines anionischen oder e) kationischen oder f) schwach anionischen Elektrolyten umfasst.

13. Verfahren zur Herstellung eines mineralischen Pigments nach einem der Ansprüche 9 bis 12, **dadurch gekennzeichnet, dass** es darüber hinaus nach einem der in den Ansprüchen 11 bis 12 beschriebenen Schritte einen Schritt g) des Trocknens umfasst.

14. Verfahren zur Herstellung eines mineralischen Pigments nach Anspruch 9, **dadurch gekennzeichnet, dass** es das Zugeben einer Base, vorzugsweise einer Base mit zweiwertigem Ion, besonders bevorzugt von Kalk und/oder Calciumcarbonat in trockener Form oder in wässriger Aufschlämmung umfasst, die gegebenenfalls ein oder mehrere anionische, kationische und/oder schwach anionische Dispergiermittel enthält.

15. Verfahren zur Herstellung eines mineralischen Pigments nach Anspruch 14, **dadurch gekennzeichnet, dass** das Calciumcarbonat ein natürliches Calciumcarbonat ist, wobei dieses natürliche Calciumcarbonat aus einem Marmor, einem Calcit, einer Kreide, einem Dolomit oder deren Mischungen ausgewählt ist.

16. Verfahren zur Herstellung eines mineralischen Pigments nach einem der Ansprüche 9 bis 15, **dadurch gekennzeichnet, dass** der oder die mittelstarken bis starken H₃O⁺-Ionendonatoren aus den mittelstarken bis starken Säuren oder deren Mischungen ausgewählt sind, die H₃O⁺-Ionen erzeugen.

17. Verfahren zur Herstellung eines mineralischen Pigments nach einem der Ansprüche 9 bis 16, **dadurch gekennzeichnet, dass** die starken Säuren vorzugsweise aus den Säuren ausgewählt sind, die bei 22 °C eine pKₐ von kleiner oder gleich Null aufweisen, und insbesondere aus Schwefelsäure, Salzsäure oder deren Mischungen ausgewählt sind, und **dadurch gekennzeichnet, dass** der oder die mittelstarken H₃O⁺-Ionendonatoren aus den Säuren ausgewählt sind, die bei 22 °C eine pKa im Bereich zwischen einschließlich 0 und 2,5 aufweisen, und insbesondere aus H₂SO₃, HSO₄⁻, H₃PO₄, Oxalsäure oder deren Mischungen ausgewählt sind, und noch bevorzugter aus den Säuren, die Salze mit zweiwertigem Kation bilden, wie etwa Calcium, die in Wasser nahezu unlöslich sind, das heißt eine Löslichkeit von kleiner als 0,01 Massen-% aufweisen.

18. Verfahren zur Herstellung eines mineralischen Pigments nach einem der Ansprüche 9 bis 17, **dadurch gekennzeichnet, dass** die starke(n) Säure(n) mit der oder den mittelstarken Säuren vermischt werden können.

19. Verfahren zur Herstellung eines mineralischen Pigments nach einem der Ansprüche 9 bis 18, **dadurch gekennzeichnet, dass** die Molmenge an mittelstarken bis starken H₃O⁺-Ionendonatoren auf die CaCO₃-Molanzahl bezogen insgesamt im Bereich zwischen 0,05 und 1, vorzugsweise zwischen 0,1 und 0,5 liegt.

20. Verfahren zur Herstellung eines mineralischen Pigments nach einem der Ansprüche 9 bis 19, **dadurch gekennzeichnet, dass** der Schritt a) und/oder der Schritt b) mehrmals wiederholt werden können.

21. Verfahren zur Herstellung eines mineralischen Pigments nach einem der Ansprüche 9 bis 20, **dadurch gekennzeichnet, dass** die Temperatur während des Schrittes a) der Behandlung im Bereich zwischen 5 °C und 100 °C, und vorzugsweise zwischen 65 °C und 90 °C liegt.

22. Verfahren zur Herstellung eines mineralischen Pigments nach Anspruch 21, **dadurch gekennzeichnet, dass** die Dauer der Schritte a) bis c) der Behandlung 0,01 Stunden bis 24 Stunden beträgt.

23. Verfahren zur Herstellung eines mineralischen Pigments nach Anspruch 22, **dadurch gekennzeichnet, dass** die Dauer der Schritte a) bis c) der Behandlung 0,2 Stunden bis 6 Stunden beträgt.

24. Verfahren zur Herstellung eines mineralischen Pigments nach einem der Ansprüche 9 bis 23, **dadurch gekennzeichnet, dass** es in wässriger Phase bei schwachen, mittelstarken oder starken Trockensubstanzkonzentrationen, vorzugsweise bei einem Trockensubstanzgehalt im Bereich zwischen 0,3 Gewichts-% und 80 Gewichts-%, besonders bevorzugt zwischen 15 % und 60 % umgesetzt wird.

25. Verfahren zur Herstellung eines mineralischen Pigments nach einem der Ansprüche 9 bis 24, **dadurch gekennzeichnet, dass** der Schritt b) ein Zusetzen von 0,1 % bis 25 %, vorzugsweise von 5 bis 10 % Trockengewicht auf das Calciumcarbonat-Trockengewicht bezogen ist.

26. Verfahren zur Herstellung eines mineralischen Pigments nach einem der Ansprüche 9 bis 25, **dadurch gekennzeichnet, dass** der Schritt d) 0,05 % bis 5,0 % Trockengewicht eines anionischen Elektrolyten einsetzt, ausgewählt aus den Homopolymeren oder Copolymeren im nicht neutralisierten, teilweise neutralisierten oder vollständig neutralisierten sauren Zustand von Monomeren mit ethylenischer Ungesättigtheit und mit Monocarbonsäurefunktion, wie etwa Acryl- oder Methacrylsäure oder auch Disäurenhalbestern wie etwa C₁- bis C₄-Monoestern von Malein- oder Itaconsäure oder deren Mischungen, oder mit Dicarbonsäurefunktion, ausgewählt aus den Monomeren mit ethylenischer Ungesättigtheit und Dicarbonsäurefunktion, wie etwa Croton-, Isocroton-, Zimt-, Itacon-, Maleinsäure, oder auch Anhydriden von Carbonsäuren, wie etwa Maleinsäureanhydrid, oder mit Sulfonsäurefunktion, ausgewählt aus den Monomeren mit ethylenischer Ungesättigtheit und mit Sulfonsäurefunktion, wie etwa Acrylamidomethylpropansulfonsäure, Natriummethallylsulfonat, Vinylsulfonsäure und Styrolsulfonsäure, oder auch mit Phosphorsäurefunktion, ausgewählt aus den Monomeren mit ethylenischer Ungesättigtheit und mit Phosphorsäurefunktion, wie etwa Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten, oder auch mit Phosphonsäurefunktion, ausgewählt aus den Monomeren mit ethylenischer Ungesättigtheit und mit Phosphonsäurefunktion, wie etwa Vinylphosphonsäure oder deren Mischungen, oder auch den Polyphosphaten.

27. Verfahren zur Herstellung eines mineralischen Pigments nach einem der Ansprüche 9 bis 26, **dadurch gekennzeichnet, dass** der Schritt e) 0,05 % bis 5,0 % Trockengewicht eines kationischen Elektrolyten einsetzt, ausgewählt aus den Homopolymeren oder Copolymeren von kationischen Monomeren oder quartären Ammoniumverbindungen mit ethylenischer Ungesättigtheit, wie etwa [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid- oder -sulfat, [3-(Methacrylamido)propyl]trimethylammoniumchlorid oder -sulfat.

28. Verfahren zur Herstellung eines mineralischen Pigments nach einem der Ansprüche 9 bis 27, **dadurch gekennzeichnet, dass** der Schritt f) 0,05 % bis 5,0 % Trockengewicht eines schwach anionischen Elektrolyten einsetzt, ausgewählt aus den schwach ionischen und wasserlöslichen Copolymeren, die zusammengesetzt sind:
a) aus mindestens einem anionischen Monomer und mit Carbonsäure- oder Dicarbonsäure- oder Phosphorsäure- oder Phosphonsäure- oder Sulfonsäurefunktion oder deren Mischung,
b) aus mindestens einem nichtionischen Monomer, wobei das nichtionische Monomer aus mindestens einem Monomer der Formel (I) besteht: 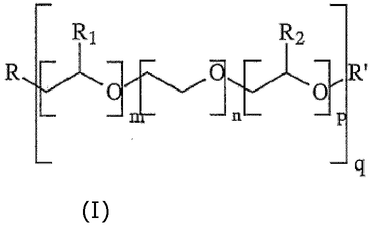 wobei:
- m und p für eine Anzahl an Alkylenoxideinheiten von kleiner oder gleich 150 stehen,
- n für eine Anzahl an Ethylenoxideinheiten von kleiner oder gleich 150 steht,
- q für eine ganze Zahl steht, die mindestens gleich 1 und derart ist, dass 5 ≤ (m+n+p)q ≤ 150, und vorzugweise derart, dass 15 ≤ (m+n+p)q ≤ 120,
- R1 für Wasserstoff oder den Methyl- oder Ethylrest steht,
- R2 für Wasserstoff oder den Methyl- oder Ethylrest steht,
- R für einen Rest steht, der eine polymerisierbare ungesättigte Funktion enthält, der vorzugsweise der Gruppe der Vinylverbindungen sowie der Gruppe der Ester von Acrylsäure, Methacrylsäure, Maleinsäure, Itaconsäure, Crotonsäure, Vinylphthalsäure sowie der Gruppe der ungesättigten Urethanverbindungen wie beispielsweise Acrylurethan, Methacrylurethan, α,α'-Dimethylisopropenylbenzylurethan, Allylurethan, ebenso wie der Gruppe der substituierten oder unsubstituierten Allyl- oder Vinylether oder auch der Gruppe der ethylenisch ungesättigten Amide oder Imide angehört,
- R' für Wasserstoff oder einen Kohlenwasserstoffrest mit 1 bis 40 Kohlenstoffatomen steht, und vorzugsweise für einen Kohlenwasserstoffrest mit 1 bis 12 Kohlenstoffatomen und besonders bevorzugt für einen Kohlenwasserstoffrest mit 1 bis 4 Kohlenstoffatomen steht,
oder aus der Mischung mehrerer Monomere der Formel (I),
c) gegebenenfalls aus mindestens einem Monomer vom Typ Acrylamid oder Methacrylamid oder deren Derivaten, wie etwa N-[3-(Dimethylamino)propyl]acrylamid oder N-[3-(Dimethylamino)propyl]methacrylamid, und deren Mischungen, oder auch aus mindestens einem wasserunlöslichen Monomer wie etwa Alkylacrylaten oder - methacrylaten, ungesättigten Estern wie etwa N-[2-(Dimethylamino)ethyl]methacrylat oder N-[2-(Dimethylamino)ethyl]acrylat, Vinylverbindungen wie etwa Vinylacetat, Vinylpyrrolidon, Styrol, alpha-Methylstyrol und deren Derivaten, oder aus mindestens einem kationischen Monomer oder quartären Ammoniumverbindungen wie etwa [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid- oder -sulfat, [3-(Methacrylamido)propyl]trimethylammoniumchlorid oder -sulfat, oder auch aus mindestens einem Organofluor- oder Organosilylmonomer, oder aus der Mischung mehrerer dieser Monomere,
d) gegebenenfalls aus mindestens einem Monomer, das mindestens zwei ethylenische Ungesättigtheiten aufweist, das in der Folge der Anmeldung als vernetzendes Monomer bezeichnet wird.

29. Wässrige Aufschlämmung des mineralischen Pigments nach einem der Ansprüche 1 bis 7, die unter Verwendung des Schrittes d) des Anspruchs 12 und 26 erhalten wird, **dadurch gekennzeichnet, dass** das mineralische Pigment nach der Norm ISO 9277 gemessen eine spezifische BET-Oberfläche im Bereich zwischen 25 m²/g und 200 m²/g, vorzugsweise zwischen 30 m²/g und 80 m²/g, und besonders bevorzugt zwischen 35 m²/g und 60 m²/g, sowie einen mittleren Durchmesser, durch eine Messung im Sedigraph™ 5100 bestimmt, im Bereich zwischen 0,1 und 50 Mikrometer, vorzugsweise im Bereich zwischen 0,5 und 40 Mikrometer, und besonders bevorzugt zwischen 1 und 10 Mikrometer aufweist, und dadurch, dass die Aufschlämmung einen Trockensubstanzgehalt im Bereich zwischen 0,3 % und 80 %, vorzugsweise zwischen 15 % und 60 % aufweist, und dadurch, dass sie 0,05 % bis 5,0 % Trockengewicht, auf das Calciumcarbonat-Trockengewicht bezogen, mindestens eines anionischen Elektrolyten enthält.

30. Wässrige Aufschlämmung nach Anspruch 29, **dadurch gekennzeichnet, dass** der anionische Elektrolyt ausgewählt ist aus den Homopolymeren oder Copolymeren im nicht neutralisierten, teilweise neutralisierten oder vollständig neutralisierten sauren Zustand von Monomeren mit ethylenischer Ungesättigtheit und mit Monocarbonsäurefunktion, wie etwa Acryl- oder Methacrylsäure oder auch Disäurenhalbestern wie etwa C₁- bis C₄-Monoestern von Malein- oder Itaconsäure oder deren Mischungen, oder mit Dicarbonsäurefunktion, ausgewählt aus den Monomeren mit ethylenischer Ungesättigtheit und Dicarbonsäurefunktion, wie etwa Croton-, Isocroton-, Zimt-, Itacon-, Maleinsäure, oder auch Anhydriden von Carbonsäuren, wie etwa Maleinsäureanhydrid, oder mit Sulfonsäurefunktion, ausgewählt aus den Monomeren mit ethylenischer Ungesättigtheit und mit Sulfonsäurefunktion, wie etwa Acrylamidomethylpropansulfonsäure, Natriummethallylsulfonat, Vinylsulfonsäure und Styrolsulfonsäure, oder auch mit Phosphorsäurefunktion, ausgewählt aus den Monomeren mit ethylenischer Ungesättigtheit und mit Phosphorsäurefunktion, wie etwa Vinylphosphorsäure, Ethylenglykolmethacrylatphosphat, Propylenglykolmethacrylatphosphat, Ethylenglykolacrylatphosphat, Propylenglykolacrylatphosphat und deren Ethoxylaten, oder auch mit Phosphonsäurefunktion, ausgewählt aus den Monomeren mit ethylenischer Ungesättigtheit und mit Phosphonsäurefunktion, wie etwa Vinylphosphonsäure oder deren Mischungen, oder auch den Polyphosphaten.

31. Wässrige Aufschlämmung des mineralischen Pigments nach einem der Ansprüche 1 bis 7, die nach dem Schritt e) des Anspruchs 12 erhalten wird, **dadurch gekennzeichnet, dass** das mineralische Pigment nach der Norm ISO 9277 gemessen eine spezifische BET-Oberfläche im Bereich zwischen 25 m²/g und 200 m²/g, vorzugsweise zwischen 30 m²/g und 80 m²/g, und besonders bevorzugt zwischen 35 m²/g und 60 m²/g, sowie einen mittleren Durchmesser, durch eine Messung im Sedigraph™ 5100 bestimmt, im Bereich zwischen 0,1 und 50 Mikrometer, vorzugsweise im Bereich zwischen 0,5 und 40 Mikrometer, und besonders bevorzugt zwischen 1 und 10 Mikrometer aufweist, und dadurch, dass die Aufschlämmung einen Trockensubstanzgehalt im Bereich zwischen 0,3 % und 80 %, vorzugsweise zwischen 15 % und 60 % aufweist, und dadurch, dass sie 0,1 % bis 5,0 % Trockengewicht, auf das Calciumcarbonat-Trockengewicht bezogen, mindestens eines kationischen Elektrolyten enthält.

32. Wässrige Aufschlämmung nach Anspruch 31, **dadurch gekennzeichnet, dass** der kationische Elektrolyt aus den kationischen Elektrolyten nach Anspruch 30 ausgewählt ist.

33. Wässrige Aufschlämmung des mineralischen Pigments nach einem der Ansprüche 1 bis 7, die nach dem Schritt f) des Anspruchs 12 erhalten wird, **dadurch gekennzeichnet, dass** das mineralische Pigment nach der Norm ISO 9277 gemessen eine spezifische BET-Oberfläche im Bereich zwischen 25 m²/g und 200 m²/g, vorzugsweise zwischen 30 m²/g und 80 m²/g, und besonders bevorzugt zwischen 35 m²/g und 60 m²/g, sowie einen mittleren Durchmesser, durch eine Messung im Sedigraph™ 5100 bestimmt, im Bereich zwischen 0,1 und 50 Mikrometer, vorzugsweise im Bereich zwischen 0,5 und 40 Mikrometer, und besonders bevorzugt zwischen 1 und 10 Mikrometer aufweist, und dadurch, dass die Aufschlämmung einen Trockensubstanzgehalt im Bereich zwischen 0,3 % und 80 %, vorzugsweise zwischen 15 % und 60 % aufweist, und dadurch, dass sie 0,05 % bis 5,0 % Trockengewicht, auf das Calciumcarbonat-Trockengewicht bezogen, mindestens eines schwach anionischen Elektrolyten enthält.

34. Wässrige Aufschlämmung nach Anspruch 33, **dadurch gekennzeichnet, dass** der schwach anionische Elektrolyt aus den schwach anionischen Elektrolyten nach Anspruch 31 ausgewählt ist.

35. Mineralisches Pigment nach einem der Ansprüche 1 bis 7, **dadurch gekennzeichnet, dass** es in trockener Form vorliegt, wenn der Schritt g) des Verfahrens nach dem Anspruchs 13 umgesetzt wird.

36. Verwendung des mineralischen Pigments nach einem der Ansprüche 1 bis 7 und 35 als Füllstoff in der eigentlichen Herstellung des ungestrichenen Papierblatts und/oder als Streichformulierungsträger in den Vorgängen der Oberflächenbehandlung des Papiers und/oder des Streichens des Papiers.

37. Verwendung der wässrigen Aufschlämmung nach einem der Ansprüche 8 und 29 bis 34 als Füllstoff in der eigentlichen Herstellung des ungestrichenen Papierblatts und/oder als Streichformulierungsträger in den Vorgängen der Oberflächenbehandlung des Papiers und/oder des Streichens des Papiers.

38. Papier für den Tintenstrahldruck, **dadurch gekennzeichnet, dass** es das mineralische Pigment nach einem der Ansprüche 1 bis 7 und 35 in der Masse und/oder in der Streichfarbe enthält.

39. Papier für den Tintenstrahldruck, **dadurch gekennzeichnet, dass** es die wässrige Aufschlämmung nach einem der Ansprüche 8 und 29 bis 34 in der Masse und/oder in der Streichfarbe enthält.

## Claims

1. Mineral pigment containing calcium carbonate **characterised in that** it contains a product formed in situ by double and/or multi reaction between one calcium carbonate and the reaction product(s) of said carbonate with gaseous CO₂ formed in situ and/or from an external feed, and the reaction product(s) of said carbonate with one or more moderately strong, i.e. having a pKₐ between 0 and 2.5 inclusive at 22°C, to strong, i.e. having a pKₐ of less than or equal to zero at 22°C, H₃O⁺ ion donors and
at least one aluminium silicate and/or
at least one synthetic silica and/or
at least one calcium silicate and/or
at least one silicate of a monovalent salt and
optionally at least one aluminium hydroxide and/or
optionally at least one sodium and/or potassium aluminate, and
**in that** it contains less than 0.1% by weight of silicate of a monovalent salt based on the dry weight of calcium carbonate, and
**characterised in that** it has a pH above 7.5 measured at 20°C;
**characterised in that** the mineral pigment has a BET specific surface area of between 25m²/g and 200m²/g measured according to the standard, ISO 9277.

2. Mineral pigment according to claim 1, **characterised in that** said silicate of monovalent salt is sodium, potassium or lithium silicate, or mixtures thereof.

3. Mineral pigment according to claim 1 or 2, **characterised in that** the calcium carbonate is natural calcium carbonate or a mixture of natural calcium carbonate with talc, kaolin, titanium dioxide, magnesium oxide or with any mineral inert with respect to moderately strong to strong H₃O⁺ ion donors.

4. Mineral pigment according to claim 3, **characterised in that** the natural calcium carbonate is selected from among marble, calcite, chalk, dolomite or mixtures thereof.

5. Mineral pigment according to one of claims 1 to 4, **characterised in that** the moderately strong to strong H₃O⁺ ion donor(s) are selected from among moderately strong to strong acids, or mixtures thereof generating H₃O⁺ ions.

6. Mineral pigment according to one of claims 1 to 5 **characterised in that** strong acids are preferably selected from acids having a pKₐ of less than or equal to 0 at 22°C and more particularly selected from among sulphuric acid, hydrochloric acid or mixtures thereof and **characterised in that** the moderately strong to strong H₃O⁺ ion donor(s) are selected from acids having a pKa between 0 and 2.5 inclusive at 22°C and more particularly selected from H₂SO₃, HSO₄⁻, H₃PO₄, oxalic acid or mixtures thereof, and even more preferably from acids forming bivalent cation salts, such as calcium, almost insoluble in water, i.e. having a solubility of less than 0.01% by mass.

7. Mineral pigment according to any one of claims 1 to 6, **characterised in that** it has a BET specific surface area of between 30m²/g and 80m²/g measured according to the standard, ISO 9277, and most preferably between 35m²/g and 60m²/g as well as a median diameter, determined by measurement using Sedigraph™ 5100 comprised between 0.1 and 50 micrometres, preferably between 0.5 and 40 micrometres and most preferably between 1 and 10 micrometres.

8. Aqueous suspension of mineral pigment **characterised in that** it contains the mineral pigment according to any one of claims 1 to 7.

9. Method for manufacturing a mineral pigment according to any one of claims 1 to 7, **characterised in that** it comprises the following steps:
a) treatment of calcium carbonate in an aqueous phase by
i) the moderately strong to strong H₃O⁺ ion donor(s),
ii) gaseous CO₂ formed in situ and/or from an external feed,
b) addition of at least one aluminium silicate and/or at least one synthetic silica and/or at least one calcium silicate and/or at least one silicate of a monovalent salt
wherein step b) is carried out before and/or simultaneously with, step a), and
**characterised in that** between one hour and twenty four hours after the end of treatment, the pH is above 7.5 measured at 20°C and
**characterised in that** the mineral pigment has a BET specific surface area of between 25m²/g and 200m²/g measured according to the standard, ISO 9277,
**characterised in that** the molar quantity of moderately strong to strong H₃O⁺ ion donors compared to the molar number of CaCO₃ is in total comprised between 0.05 and 1, preferably between 0.1 and 0.5.

10. Method for manufacturing a mineral pigment according to claim 9, **characterised in that** step b) further comprises the addition before and/or simultaneously of sodium and/or potassium aluminate.

11. Method for manufacturing a mineral pigment according to claim 9 to 10, **characterised in that** it further comprises step c) of adding a base, preferably a bivalent ion base, most preferably chalk and/or calcium carbonate as a dry form or in aqueous suspension containing optionally one or more anionic, cationic and/or weakly anionic dispersants.

12. Method for manufacturing a mineral pigment according to any one of claims 9 to 11, **characterised in that** it further comprises a step d) of making an anionic or cationic or weakly anionic aqueous suspension of the product obtained in step b) or c) at a dry concentration of between 1% and 80%, optionally using at least one anionic or e) cationic or f) weakly anionic electrolyte.

13. Method for manufacturing a mineral pigment according to any one of claims 9 to 12, **characterised in that** it further comprises step g) of drying after one of the steps described in claims 11 to 12.

14. Method for manufacturing a mineral pigment according to claim 9, **characterised in that** it comprises the addition of a base, preferably a bivalent ion base, most preferably chalk and/or calcium carbonate as a dry form or in aqueous suspension containing optionally one or more anionic, cationic and/or weakly anionic dispersants.

15. Method for manufacturing a mineral pigment according to claim 14, **characterised in that** the natural calcium carbonate is selected from among marble, calcite, chalk, dolomite or mixtures thereof.

16. Method for manufacturing a mineral pigment according to one of claims 9 to 15 **characterised in that** the moderately strong to strong H₃O⁺ ion donor(s) are selected from among moderately strong to strong acids, or mixtures thereof generating H₃O⁺ ions.

17. Method for manufacturing a mineral pigment according to one of claims 9 to 16 **characterised in that** strong acids are preferably selected from acids having a pKₐ of less than or equal to 0 at 22°C and more particularly selected from sulphuric acid, hydrochloric acid or mixtures thereof and **characterised in that** the moderately strong to strong H₃O⁺ ion donor(s) are selected from among acids having a pKa between 0 and 2.5 inclusive at 22°C and more particularly selected from among H₂SO₃, HSO₄⁻, H₃PO₄, oxalic acid or mixtures thereof, and even more preferably from acids forming bivalent cation salts, such as calcium, almost insoluble in water, i.e. having a solubility of less than 0.01% by mass.

18. Method for manufacturing a mineral pigment according to one of claims 9 to 17 **characterised in that** the strong acid(s) could be mixed with the moderately strong acid(s).

19. Method for manufacturing a mineral pigment according to one of claims 9 to 18 **characterised in that** the molar quantity of moderately strong to strong H₃O⁺ ion donors compared to the molar number of CaCO₃ is in total comprised between 0.05 and 1, preferably between 0.1 and 0.5.

20. Method for manufacturing a mineral pigment according to one of claims 9 to 19 **characterised in that** step a) and/or step b) can be repeated several times.

21. Method for manufacturing a mineral pigment according to one of claims 9 to 20 **characterised in that** the temperature during step a) of treatment is comprised between 5°C and 100°C, and preferably between 65°C and 90°C.

22. Method for manufacturing a mineral pigment according to claim 21 **characterised in that** the time of steps a) to c) of treatment lasts 0.01 hour to 24 hours.

23. Method for manufacturing a mineral pigment according to claim 22 **characterised in that** the time of steps a) to c) of treatment lasts 0.2 hour to 6 hours.

24. Method for manufacturing a mineral pigment according to one of claims 9 to 23 **characterised in that** it is performed in an aqueous phase at low, moderately strong or strong solid concentration, preferably for a dry content of between 0.3% and 80% by weight, most preferably between 15% and 60%.

25. Method for manufacturing a mineral pigment according to one of claims 9 to 24 **characterised in that** step b) is an addition of 0.1% to 25%, preferably 5 to 10% by dry weight with respect to the dry weight of calcium carbonate.

26. Method for manufacturing a mineral pigment according to one of claims 9 to 25 **characterised in that** step d) uses from 0.05% to 5.0% by dry weight of an anionic electrolyte selected from homopolymers or copolymers in an non-neutralised, partially neutralised or completely neutralised acid state, ethylenically-unsaturated monomers with monocarboxylic function, such as acrylic or methacrylic acid, or diacid hemiesters, such as C₁-C₄ monoesters of maleic or itaconic acids, or mixtures thereof, or with a dicarboxylic function selected from ethylenically-unsaturated monomers with dicarboxylic function such as crotonic, isocrotonic, cinnamic, itaconic, maleic acid, or carboxylic acid anhydrides, such as maleic anhydride or with a sulphonic function selected from ethylenically-unsaturated monomers with sulphonic function, such as acrylamido-methyl-propane-sulphonic acid, sodium methallylsulphonate, vinylsulphonic acid and styrenesulphonic acid or with a phosphoric function selected from ethylenically-unsaturated monomers with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates or with a phosphonic function selected from ethylenically-unsaturated monomers with a phosphonic function such as vinyl phosphonic acid, or mixtures thereof, or polyphosphates.

27. Method for manufacturing a mineral pigment according to one of claims 9 to 26 **characterised in that** step e) uses 0.05% to 5.0% by dry weight of a cationic electrolyte selected from homopolymers or copolymers of cationic monomers or ethylenically-unsaturated quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate.

28. Method for manufacturing a mineral pigment according to one of claims 9 to 27 **characterised in that** step f) uses 0.05% to 5.0% by dry weight of a weakly anionic electrolyte selected from weakly ionic and water soluble copolymers comprising:
a) at least one anionic monomer with a carboxylic or dicarboxylic or phosphoric or phosphonic or sulphonic function or mixture thereof,
b) at least one non-ionic monomer, wherein the non-ionic monomer consists of at least one monomer of formula (I): 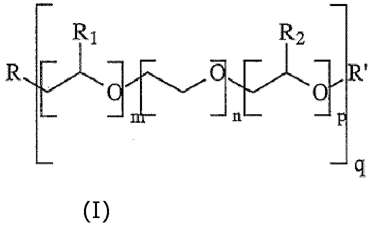 wherein:
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150, and preferably such that 15 ≤ (m+n+p)q ≤ 120,
- R1 represents hydrogen or a methyl or ethyl radical,
- R2 represents hydrogen or a methyl or ethyl radical,
- R represents a radical containing a polymerisable unsaturated function, preferably belonging to the group of vinyls as well as to the group of acrylic, methacrylic, maleic, itaconic, crotonic and vinylphthalic esters, as well as to the group of unsaturated urethanes such as, for example, acrylurethane, methacrylurethane, α,α'-dimethyl-isopropenyl-benzylurethane, allylurethane, as well as to the group of substituted or unsubstituted allylic or vinyl ethers, or to the group of ethylenically-unsaturated amides or imides,
- R' represents hydrogen or a hydrocarbon radical having 1 to 40 carbon atoms, and represents preferably a hydrocarbon radical having 1 to 12 carbon atoms and most preferably a hydrocarbon radical having 1 to 4 carbon atoms,
or mixture of several monomers of formula (I),
c) optionally at least one acrylamide or methacrylamide type monomer or derivatives thereof such as N-[3-(dimethylamino) propyl] acrylamide or N-[3-(dimethylamino) propyl] methacrylamide, and mixtures thereof, or at least one non-water soluble monomer such as alkyl acrylates or methacrylates, unsaturated esters such as N-[2-(dimethylamino) ethyl] methacrylate, or N-[2-(dimethylamino) ethyl] acrylate, vinyls such as vinyl acetate, vinylpyrrolidone, styrene, alphamethylstyrene and derivatives thereof, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or at least one organofluorinated or organosilicon monomer, or a mixture of several of these monomers,
d) optionally at least one monomer having at least two ethylenic unsaturations named afterwards in the application crosslinking monomer.

29. Aqueous suspension of the mineral pigment according to any one of claims 1 to 7 obtained using step d) of claim 12 and 26,
**characterised in that** the mineral pigment has a BET specific surface area of between 25m²/g and 200m²/g measured according to the standard, ISO 9277, preferably of between 30m²/g and 80m²/g and most preferably of between 35m²/g and 60m²/g as well as a median diameter, determined by measurement using Sedigraph™ 5100, comprised between 0.1 and 50 micrometres, preferably between 0.5 and 40 micrometres and most preferably between 1 and 10 micrometres, and **in that** the suspension has a dry content of between 0.3% and 80% by weight, preferably of between 15% and 60% and that it contains from 0.05% to 5.0% by dry weight, with respect to the dry weight of calcium carbonate, of at least one anionic electrolyte.

30. Aqueous suspension according to claim 29, **characterised in that** the anionic electrolyte is selected from among homopolymers or copolymers in an non-neutralised, partially neutralised or completely neutralised acid state, ethylenically-unsaturated monomers with monocarboxylic function, such as acrylic or methacrylic acid, or diacid hemiesters, such as C₁-C₄ monoesters of maleic or itaconic acids, or mixtures thereof, or with a dicarboxylic function selected from among ethylenically-unsaturated monomers with dicarboxylic function such as crotonic, isocrotonic, cinnamic, itaconic, maleic acid, or carboxylic acid anhydrides, such as maleic anhydride or with a sulphonic function selected from among ethylenically-unsaturated monomers with sulphonic function, such as acrylamido-methyl-propane-sulphonic acid, sodium methallylsulphonate, vinylsulphonic acid and styrenesulphonic acid or with a phosphoric function selected from ethylenically-unsaturated monomers with a phosphoric function such as vinyl phosphoric acid, ethylene glycol methacrylate phosphate, propylene glycol methacrylate phosphate, ethylene glycol acrylate phosphate, propylene glycol acrylate phosphate and the ethoxylates thereof or with a phosphonic function selected from ethylenically-unsaturated monomers with a phosphonic function such as vinyl phosphonic acid, or mixtures thereof, or polyphosphates.

31. Aqueous suspension of mineral pigment according to any one of claims 1 to 7 obtained using step e) of claim 12, **characterised in that** the mineral pigment has a BET specific surface area of between 25m²/g and 200m²/g measured according to the standard, ISO 9277, preferably of between 30m²/g and 80m²/g and most preferably of between 35m²/g and 60m²/g as well as a median diameter, determined by measurement using Sedigraph™ 5100, comprised between 0.1 and 50 micrometres, preferably between 0.5 and 40 micrometres and most preferably between 1 and 10 micrometres, and **in that** the suspension has a dry content of between 0.3% and 80% by weight, preferably between 15% and 60% and that it contains from 0.1% to 5.0% by dry weight, with respect to the dry weight of calcium carbonate, of at least one cationic electrolyte.

32. Aqueous suspension according to claim 31, **characterised in that** the cationic electrolyte is selected from among the cationic electrolytes according to claim 30.

33. Aqueous suspension of mineral pigment according to any one of claims 1 to 7 obtained using step f) of claim 12, **characterised in that** the mineral pigment has a BET specific surface area of between 25m²/g and 200m²/g measured according to the standard, ISO 9277, preferably of between 30m²/g and 80m²/g and most preferably of between 35m²/g and 60m²/g as well as a median diameter, determined by measurement using Sedigraph™ 5100, comprised between 0.1 and 50 micrometres, preferably between 0.5 and 40 micrometres and most preferably of between 1 and 10 micrometres, and **in that** the suspension has a dry content of between 0.3% and 80% by weight, preferably of between 15% and 60% and that it contains from 0.05% to 5.0% by dry weight, with respect to the dry weight of calcium carbonate, of at least one weakly anionic electrolyte.

34. Aqueous suspension according to claim 33, **characterised in that** the weakly anionic electrolyte is selected from among the weakly anionic electrolytes according to claim 31.

35. Mineral pigment according to any of claims 1 to 7, **characterised in that** it is in a dry form when step g) of the method according to claim 13 is carried out.

36. Use of the mineral pigment according to any one of claims 1 to 7 and 35 as a filler in the manufacturing of uncoated paper sheet and/or as a coating formulation support in paper surface and/or paper coating treatment operations.

37. Use of the aqueous suspension according to any one of claims 8 and 29 to 34 as a filler in the manufacturing of uncoated paper sheet and/or as a coating formulation support in paper surface and/or paper coating treatment operations.

38. Paper for inkjet printing, **characterised in that** it contains the mineral pigment according to any one of claims 1 to 7 and 35 in the bulk and/or in the coating.

39. Paper for inkjet printing, **characterised in that** it contains an aqueous suspension according to any one of claims 8 and 29 to 34 in the bulk and/or in the coating.
